# EUROPEAN PATENT SPECIFICATION

(11) **EP 4 199 447 B1**
(45) Date of publication and mention of the grant of the patent: **21.05.2025**
(21) Application number: 21863533.2
(22) Date of filing: 23.08.2021
(51) Int. Cl.: H04L 45/50, H04L 45/302, H04L 41/00, H04L 43/10, H04L 101/659, H04L 45/02, H04L 45/745

(54) **OPERATION ADMINISTRATION AND MAINTENANCE (OAM) PACKET PROCESSING METHOD AND DEVICE**
PAKETVERARBEITUNGSVERFAHREN UND -VORRICHTUNG FÜR OPERATIONSVERWALTUNG UND -WARTUNG (OAM)
PROCÉDÉ ET DISPOSITIF DE TRAITEMENT DE PAQUETS D'EXPLOITATION, D'ADMINISTRATION ET DE MAINTENANCE (OAM)

(30) Priority: 03.09.2020 CN 202010917057
(43) Date of publication of application: 21.06.2023
(73) Proprietor: Huawei Technologies Co., Ltd., Shenzhen, Guangdong 518129 (CN)
(72) Inventor: YU, Tao, Shenzhen, Guangdong 518129 (CN); ZHAO, Qi, Shenzhen, Guangdong 518129 (CN); CHEN, Zhiguo, Shenzhen, Guangdong 518129 (CN)
(74) Representative: Gill Jennings & Every LLP
(86) International application number: PCT/CN2021/113974
(87) International publication number: WO 2022/048466

(56) References cited:
- CN-A- 103 580 894
- CN-A- 104 380 673
- US-A1- 2009 161 562
- US-A1- 2013 259 056
- TAYLOR T ET AL: "Applicability of Generic YANG Data Model for layer Independent OAM Management; draft-zhuang-lime-yang-oam-model-applicability-01.txt", APPLICABILITY OF GENERIC YANG DATA MODEL FOR LAYER INDEPENDENT OAM MANAGEMENT; DRAFT-ZHUANG-LIME-YANG-OAM-MODEL-APPLICABILITY-01.TXT, INTERNET ENGINEERING TASK FORCE, IETF; STANDARDWORKINGDRAFT, INTERNET SOCIETY (ISOC) 4, RUE DES FALAISES CH- 1205 GE, 8 October 2015 (2015-10-08), pages 1 - 41, XP015108801
- 7 January 2015 (2015-01-07), W. GEORGE, ED. TIME WARNER CABLE C. PIGNATARO, ED. CISCO: "Gap Analysis for Operating IPv6-Only MPLS Networks; rfc7439.txt", XP015104527, Database accession no. 7439
- SAM ALDRIN HUAWEI TECHNOLOGIES M.VENKATESAN DELL INC. KANNAN KV SAMPATH REDEEM SOFTWARE THOMAS D. NADEAU BROCADE: "BFD Management Information Base (MIB) extensions for MPLS and MPLS-TP Networks; draft-ietf-bfd-mpls-mib-05.txt", BFD MANAGEMENT INFORMATION BASE (MIB) EXTENSIONS FOR MPLS AND MPLS-TP NETWORKS; DRAFT-IETF-BFD-MPLS-MIB-05.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 29 December 2014 (2014-12-29), Internet Society (ISOC) 4, rue des Falaises CH- 1205 Geneva, Switzerland , pages 1 - 23, XP015103743

## Description

### TECHNICAL FIELD

This application relates to the field of communications technologies, and in particular, to operation, administration, and maintenance (English: Operation, Administration, and Maintenance, OAM for short) packet processing methods, devices, a computer-readable storage medium and a system.

### BACKGROUND

A multi-protocol label switching transport profile (English: Multi Protocol Label Switching-Transport Profile, MPLS-TP for short) is a strict subset of MPLS. To adapt to a requirement of a transport network, some features that are not applicable to a transport network scenario and that are of MPLS are excluded, and a connection-oriented transmission technology that integrates MPLS packet switching and a transport network feature is used. OAM mainly includes three aspects: fault management (English: Fault Management), performance monitoring (English: Performance Monitoring), and protection switching (English: Protection Switching), can reflect a running status of a network, and is a most important network management means of an operator. An MPLS-TP OAM mechanism learns from and reuses the Y 1731 standard, and mainly includes OAM functions at a label switched path (English: Label Switched Path, LSP for short) layer, a pseudo wire (English: Pseudo Wire, PW for short) layer, a section (English: Section, Sec for short) layer, and a ring (English: Ring) layer.

Currently, in an IP mode of MPLS-TP OAM, an existing network device identifier and an existing path identifier are used to respectively identify a sender network device and a to-be-detected path, and a maintenance entity group (English: Maintenance Entity Group, MEG for short) identifier and a maintenance entity group end point (English: Maintenance Entity Group End Point, MEP for short) identifier do not need to be additionally configured on the network device, so that fault management, performance monitoring, and protection switching can be implemented, which greatly reduces configuration costs and improves detection efficiency. Therefore, MPLS-TP OAM is favored by many carriers.

However, the IP mode of MPLS-TP OAM is applicable only to internet protocol version 4 (English: Internet Protocol version 4, IPv4 for short), and a field that is in an OAM packet and that is used to carry an identifier of the network device is only 32-bit space corresponding to IPv4. With evolution from IPv4 to internet protocol version 6 (English: Internet Protocol version 6, IPv6 for short), to urgently resolve a problem that IPv6 cannot be applied in an MPLS-TP OAM scenario, an MPLS-TP OAM mechanism that can be applied to IPv4 and IPv6 is provided. US 2009/0161562 A1 discloses methods for scalable and rapid Ethernet fault detection mechanisms which eliminate the requirement to contiguously send heartbeat frames at regular intervals to detect connectivity faults for each Ethernet Path. TAYLOR T ET AL: "Applicability of Generic YANG Data Model for layer Independent OAM Management; draft-zhuang-lime-yang-oam-modelapplicability- 01 .txt",APPLICABILITY OF GENERIC YANG DATA MODEL FOR LAYER INDEPENDENT OAM MANAGEMENT; DRAFT-ZHUANGLIME- YANG-OAM-MODEL-APPLICABILITY-01 .TXT, INTERNET ENGINEERING TASK FORCE, IETF; STANDARDWORKINGDRAFT, INTERNET SOCIETY (ISOC) 4, RUE DES FALAISES CH- 1205 GE, 8 October 2015 (2015-10-08), pages 1-41, XP015108801 discloses the application of a generic YANG data model to various network OAM technologies, enhancing protocol interoperability.

### SUMMARY

Based on this, embodiments of this application provide OAM packet processing methods, devices, a computer-readable storage medium and a system to expand an application scope based on advantages of MPLS-TP OAM, so that IPv4 and IPv6 are applicable, an MPLS-TP OAM mechanism is improved, and better use experience is provided for an operator. The invention is so defined by the appended set of claims.

### BRIEF DESCRIPTION OF DRAWINGS

FIG. 1a is a schematic diagram of a format of an OAM PDU in an ICC mode;
FIG. 1b is a schematic diagram of a format of an OAM PDU in an IP mode;
FIG. 2a is a schematic diagram of a format of an OAM PDU in an IPv4 mode;
FIG. 2b is a schematic diagram of a format of an OAM PDU in an IPv6 mode;
FIG. 3 is a signaling flowchart of an OAM packet processing method 100 according to an embodiment of this application;
FIG. 4a is a schematic diagram in which a type field indicates an OAM PDU in an LSP IPv6 mode;
FIG. 4b is a schematic diagram in which a type field indicates an OAM PDU in a PW IPv4 mode;
FIG. 4c is a schematic diagram in which a type field indicates an OAM PDU in a Section IPv4 mode according to an embodiment of this application;
FIG. 4d is a schematic diagram in which a type field indicates an OAM PDU in a Section IPv6 mode according to an embodiment of this application;
FIG. 4e is a schematic diagram in which a type field indicates an OAM PDU in a Ring IPv4 mode according to an embodiment of this application;
FIG. 4f is a schematic diagram in which a type field indicates an OAM PDU in a Ring IPv6 mode according to an embodiment of this application;
FIG. 5a is a schematic diagram in which a reserved field in an LSP scenario indicates an OAM PDU in an IPv4 mode;
FIG. 5b is a schematic diagram in which a reserved field in an LSP scenario indicates an OAM PDU in an IPv6 mode;
FIG. 5c is a schematic diagram in which a reserved field in a PW scenario indicates an OAM PDU in an IPv4 mode;
FIG. 5d is a schematic diagram in which a reserved field in a PW scenario indicates an OAM PDU in an IPv6 mode;
FIG. 5e is a schematic diagram in which a reserved field in a section scenario indicates an OAM PDU in an IPv4 mode according to an embodiment of this application;
FIG. 5f is a schematic diagram in which a reserved field in a section scenario indicates an OAM PDU in an IPv6 mode according to an embodiment of this application;
FIG. 5g is a schematic diagram in which a reserved field in a ring scenario indicates an OAM PDU in an IPv4 mode according to an embodiment of this application;
FIG. 5h is a schematic diagram in which a reserved field in a ring scenario indicates an OAM PDU in an IPv6 mode according to an embodiment of this application;
FIG. 6 is a schematic diagram of another OAM PDU corresponding to the scenario in FIG. 2b according to an embodiment of this application;
FIG. 7 is a signaling flowchart of an OAM packet processing method 200 according to an embodiment of this application;
FIG. 8a is a schematic diagram of another OAM PDU corresponding to the scenario in FIG. 4a according to an embodiment of this application;
FIG. 8b is a schematic diagram of still another OAM PDU corresponding to the scenario in FIG. 4a according to an embodiment of this application;
FIG. 8c is a schematic diagram of yet another OAM PDU corresponding to the scenario in FIG. 4a according to an embodiment of this application;
FIG. 9 is a schematic flowchart of an OAM packet processing method 300 according to an embodiment of this application;
FIG. 10 is a schematic flowchart of an OAM packet processing method 400 according to an embodiment of this application;
FIG. 11 is a schematic flowchart of an OAM packet processing method 500 according to an embodiment of this application;
FIG. 12 is a schematic flowchart of an OAM packet processing method 600 according to an embodiment of this application;
FIG. 13 is a schematic diagram of a structure of a first communications apparatus 1300 according to an embodiment of this application;
FIG. 14 is a schematic diagram of a structure of a second communications apparatus 1400 according to an embodiment of this application;
FIG. 15 is a schematic diagram of a structure of a first communications apparatus 1500 according to an embodiment of this application;
FIG. 16 is a schematic diagram of a structure of a second communications apparatus 1600 according to an embodiment of this application;
FIG. 17 is a schematic diagram of a structure of a first communications apparatus 1700 according to an embodiment of this application;
FIG. 18 is a schematic diagram of a structure of a second communications apparatus 1800 according to an embodiment of this application; and
FIG. 19 is a schematic diagram of a structure of a communications system 1900 according to an embodiment of this application.

### DESCRIPTION OF EMBODIMENTS

The following describes technical solutions of embodiments in this application with reference to accompanying drawings. A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of new service scenarios, the technical solutions provided in embodiments of this application are also applicable to similar technical problems.

Ordinal numbers such as "1", "2", "3", "first", "second", and "third" in this application are used to distinguish between a plurality of objects, but are not intended to limit a sequence of the plurality of objects.

It should be understood that "A and/or B" mentioned in this application includes the following cases: Only A is included, only B is included, or both A and B are included.

Based on an actual requirement of an operator network, management work of the network usually includes three categories: operation (English: Operation), administration (English: Administration), and maintenance (English: Maintenance), OAM for short. MPLS-TP OAM is an OAM mechanism defined in MPLS-TP. MPLS-TP OAM is compatible with MPLS OAM functions and is correspondingly extended for transport network characteristics. Therefore, MPLS-TP OAM is widely concerned by carriers.

Currently, there are two modes of MPLS-TP OAM: an international telecommunication union carrier code (English: International Telecommunication Union Carrier Code, ICC for short) mode and an internet protocol (English: Internet Protocol, IP for short) mode. The ICC mode is a mode defined in Y.1731. In the ICC mode, a maintenance entity group end point identifier (English: Maintenance Entity Group End Point Identifier, MEP ID for short) and a maintenance entity group identifier (English: Maintenance Entity Group Identifier, MEG ID for short) need to be configured on a network device, and the MEP ID and the MEG ID is carried in an OAM packet, to manage a network. In the IP mode, an MEP ID and an MEG ID do not need to be additionally configured on a network device, but an identifier of the network device and an identifier of a path are carried in an OAM packet, to manage a network.

The OAM packet may include, for example, a continuity check message (English: Continuity Check Message, CCM for short), a loss measurement message (English: Loss Measurement Message, LMM for short), and a loss measurement reply (English: Loss Measurement Reply, LMR for short) packet.

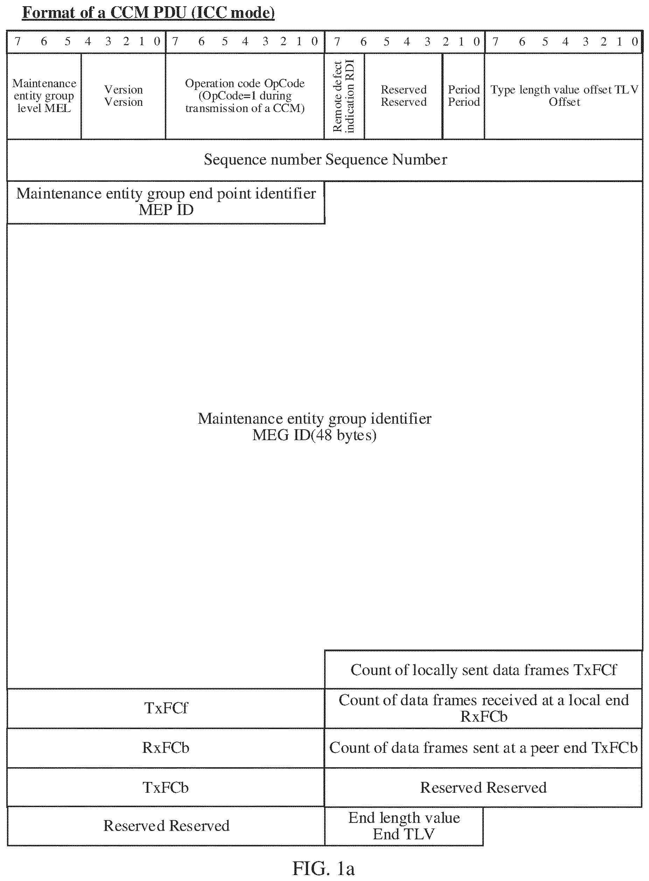

A CCM of MPLS-TP OAM is used as an example. A format of a protocol data unit (English: Protocol Data Unit, PDU for short) of the CCM in an ICC mode is shown in FIG. 1a. The CCM PDU includes: an MEG level (English: Maintenance Entity Group Level, MEL for short) field, a version (English: Version) field, an operation code (English: Operation Code, OpCode for short) field, a remote defect indication (English: Remote Defect Indication, RDI for short) field, a reserved (English: Reserved) field, a period (English: Period) field, a type length value (English: Type Length Value, TLV for short) offset (English: Offset) field, a sequence number (English: Sequence Number) field, an MEP ID field, an MEG ID (also referred to as MAID) field, a count of data frames sent at a local end TxFCf field, a count of data frames received at the local end RxFCb field, a count of data frames sent at a peer end TxFCb field, a reserved field, and an end TLV (English: End TLV) field. A value of the MEL field is used to identify a level of the CCM PDU, and is an integer ranging from 0 to 7. A value of the version field is used to identify a used protocol version. For MPLS-TP OAM, an applicable protocol version is Y 1731, and a value that is of the version field and that corresponds to the protocol version is 0. A value of the OpCode field is used to identify a type of the OAM PDU, to identify content of the OAM PDU based on the type of the OAM PDU. For the CCM, a value of the OpCode is 1. A value of the RDI field is used to identify whether a transmit end MEP detects a fault. When the value of the RDI field is 1, it indicates that the transmit end MEP detects a fault. When the value of the RDI field is 0, it indicates that the transmit end MEP does not detect a fault. A value of the period field is used to identify a period of sending a CCM. For example, when the value of the period field is 1, it indicates that the period of sending the CCM is 3.33 milliseconds (that is, 300 frames of CCMs are sent per second). When the value of the period field is 2, indicates that the period of sending the CCM is 10 milliseconds (that is, 100 frames of CCMs are sent per second). A value of the TLV offset field is used to indicate an offset of a first TLV in the OAM PDU relative to the TLV offset field, and a specific value is related to a type of the OAM PDU. For example, when TLV Offset=0, it indicates that the first TLV follows the TLV offset field, and the value of the TLV offset field in the CCM is 0x46. A value of the sequence number field is used to identify a sequence number. For MPLS-TP OAM, a value of the sequence number field is 0. A length of the MEP ID field is 16 bits, and a value of the MEP ID field is used to uniquely identify, in the MEG ID field, an MEP of sending a CCM frame, and is usually set to the least significant 13 bits. A length of the MEP ID field is 384 bits, and a value of the MEG ID field is used to globally uniquely identify an MEG to which the MEP of sending the CCM frame belongs. A value of the TxFCf field is used to indicate a count value of a non-exceeding data frame counter sent by a carrier MEP to a peer MEP during transmission of a CCM frame. A value of the RxFCb field is used to indicate a count value of a non-exceeding data frame counter received by a peer MEP during transmission of a CCM frame. When dual-ended performance statistics are not performed, the value of the RxFCb field is 0. A value of the TxFCb field is used to indicate a count value of a non-exceeding data frame counter sent by a peer MEP during transmission of a CCM frame. When dual-ended performance statistics are not performed, the values of the TxFCf field, the RxFCb field, and the TxFCb field are all 0. A value of the end TLV field is used to identify a quantity of all-zero bytes included in the CCM PDU.

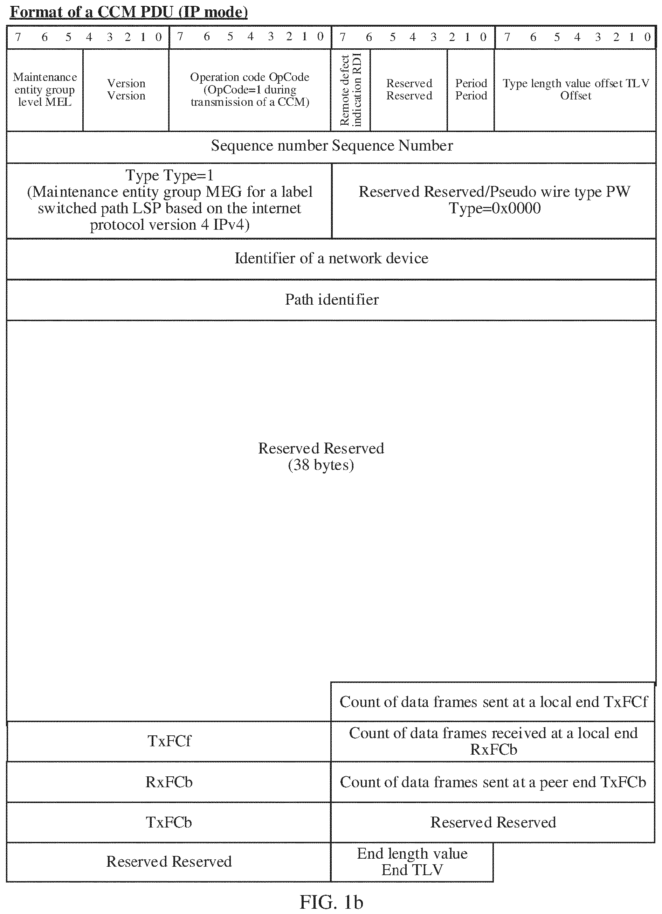

A format of the CCM PDU in the IP mode is shown in FIG. 1b. The CCM PDU includes: an MEL field, a version field, an OpCode field, an RDI field, a reserved field, a period field, a TLV offset field, a sequence number field, a type field, a reserved/PW type field, a network device identifier field, a path identifier field, a reserved field, a TxFCf field, an RxFCb field, a TxFCb field, a reserved field, and an end TLV field. For related descriptions of the MEL field, the version field, the OpCode field, the RDI field, the period field, the TLV offset field, the sequence number field, the TxFCf field, the RxFCb field, the TxFCb field, and the end TLV field, refer to descriptions in FIG. 1a. A value of the type field is used to indicate a type of a path detected by the CCM. For example, if the value of the type field is 1, it indicates that the CCM detects a label switched path (English: Label Switched Path, LSP for short). A value of the reserved/PW type field is used to indicate a service type. For example, when the value of the reserved/PW type field is 0x0000, the value of the reserved/PW type field is used to indicate a path type indicated by the value of the type field. For example, when Type=1 and Reserved/PW Type=0x0000, it indicates that the CCM detects an LSP. When values of the reserved/PW type field is 0x0002 to 0x001B, 0x1001, and 0x1002, the values are respectively used to indicate different pseudo wire (English: Pseudo Wire, PW for short) service types. A value of the network device identifier field is used to uniquely identify a network device that sends the CCM. For example, assuming that the network device is a label switching router (English: Label Switching Router, LSR for short), a value of the network device identifier field may be an LSR ID. A value of the path identifier field is used to uniquely identify a to-be-detected path. For example, assuming that the network device is an LSR, a value of the path identifier field may be specifically an identifier of a tunnel in which the LSR is located.

It should be noted that an MPLS-TP OAM operation is performed based on a maintenance entity (English: Maintenance Entity, ME for short). One ME may be understood as two endpoints of a path, that is, a pair of MEPs and an intermediate MEG intermediate point (English: Maintenance Entity Group Intermediate Point, MIP for short). An OAM function mainly runs between the two MEPs. One or more MEs that belong to a same transmission path form one MEG. The MEP has a capability of initiating and terminating an OAM packet, and can perform fault management and performance monitoring. The MIP is an intermediate point of the MEG, can forward an OAM packet, and respond to a part of the OAM packet, but cannot initiate the OAM packet.

In an ICC mode, to uniquely identify a sender network device and a transmission path of OAM detection, an MEP ID and an MEG ID are configured on the network device, and the MEP ID and MEG ID are carried in the OAM packet. In this way, if there are a large quantity of network devices on a network, a large quantity of configurations need to be performed. In addition, to ensure effectiveness of OAM detection, configuring repeated MEP IDs and MEG IDs on a large quantity of network devices further need to be avoided, which is not simple and convenient for a user. In the IP mode, known information on the network device, that is, an identifier of the network device and an identifier of a path, is used to replace functions of the MEP ID and the MEG ID in the OAM packet, that is, uniquely identify the sender network device and the transmission path of OAM detection. Therefore, in the IP mode of MPLS-TP OAM, the MEP ID and the MEG ID do not need to be configured on the network device, so that a configuration workload of a user can be reduced and repeated configuration does not need to be considered. Therefore, the IP mode has significant advantages and is favored by users.

Currently, an OAM packet in the IP mode of MPLS-TP OAM is shown in FIG. 1b. A length of a network device identifier field is 32 bits, and the field is applicable only to carrying an IP address of a network device in an internet protocol version 4 (English: Internet Protocol version 4, IPv4 for short) scenario, and cannot be applied to carrying a 128-bit IP address of a network device in an internet protocol version 6 (English: Internet Protocol version 6, IPv6 for short) scenario. Therefore, the IP mode of MPLS-TP OAM cannot meet requirements of an IPv6 network and a network smoothly evolving from IPv4 to IPv6.

Based on this, an embodiment of this application provides an OAM packet processing method. An OAM packet generated by a sender network device includes indication information, and the indication information is used to indicate a type of an identifier of the sender network device, that is, indicate whether the identifier of the sender network device is an IPv4 address or an IPv6 address. When the indication information carried in the OAM packet indicates that an IP address of the sender network device is the IPv4 address, the identifier that is of the first network device and that is included in the OAM packet is the IPv4 address of the first network device. When the indication information carried in the OAM packet indicates that an IP address of the sender network device is the IPv6 address, the identifier that is of the first network device and that is included in the OAM packet is the IPv6 address of the first network device. In this way, a second network device that receives the OAM packet can determine, based on the indication information, the type of the identifier that is of the sender network device and that is carried in the OAM packet, and accurately read the identifier of the sender network device from the OAM packet. Therefore, a user can perform MPLS-TP OAM to reduce a configuration workload, and can also implement MPLS-TP OAM in a plurality of scenarios such as an IPv4 network, an IPv6 network, and a network including IPv4 and IPv6, to expand an application scope of MPLS-TP OAM, and improve use experience of the user.

It should be noted that the OAM packet in this embodiment of this application may be a packet corresponding to any mode of MPLS-TP OAM. For example, if the OAM packet is a packet corresponding to an ICC mode of MPLS-TP OAM, the indication information in the OAM packet may also be used to indicate a type of an identifier (that is, an MEP ID) of the first network device, and is specifically used to indicate whether the OAM packet is an IPv4 network packet or an IPv6 network packet. In the IP mode of MPLS-TP OAM, the MEP ID and the MEG ID do not need to be configured on the network device, so that configuration resources can be saved. Therefore, the IP mode provides better user experience. Based on this, in this embodiment of this application, the OAM packet corresponding to the IP mode of MPLS-TP OAM is used as an example for related description.

For example, the CCM is still used as an example. In this embodiment of this application, a value of the type field is set to indicate an MEG type detected by the CCM and an applicable IP network. For example, values 1 to 4 of the type field respectively indicate that the CCM detects MEGs of an LSP type, a PW type, a section (English: Section) type, and a ring (English: Ring) type, and is applicable to an IPv4 network; and values 5 to 8 of the type field respectively indicate that the CCM detects MEGs of an LSP type, a PW type, a section type, and a ring type, and is applicable to an IPv6 network.

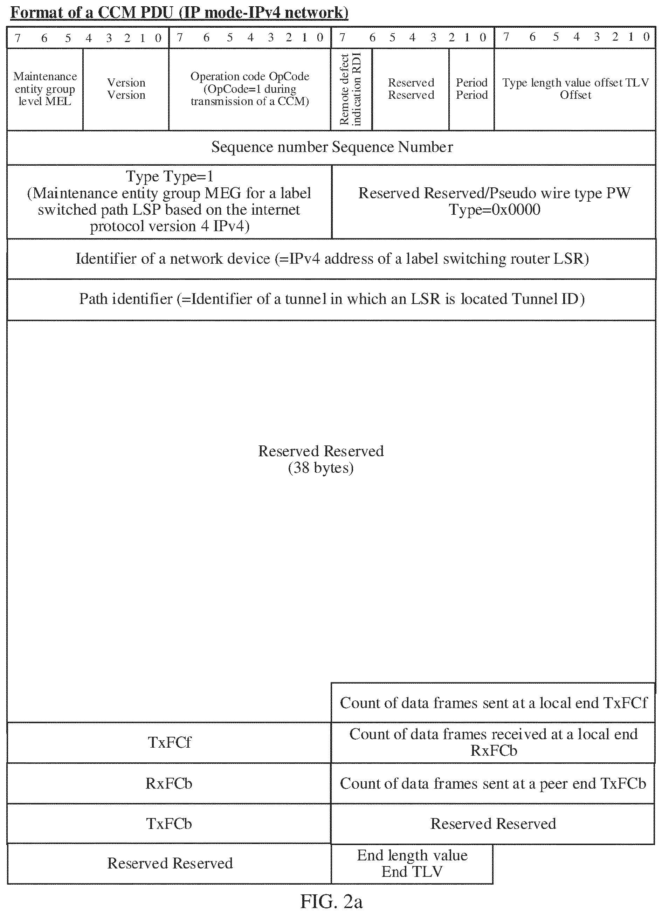

In an example, a format of a CCM PDU in a CCM generated by a network device in an IPv4 network is shown in FIG. 2a. In addition to the MEL field, the version field, the OpCode field, the RDI field, the reserved field, the period field, the TLV offset field, the sequence number field, the TxFCf field, the RxFCb field, the TxFCb field, the reserved field, and the end TLV field, the CCM PDU further includes a type field, a reserved field, a network device identifier field, a path identifier field, and a reserved field. If a value of the type field is 1, it indicates that the CCM detects an MEG of an LSP type and is applicable to an IPv4 network. A value of the network device identifier field is an LSR ID, and the LSR ID may be specifically a 32-bit IPv4 address of an LSR. A value of the path identifier field is an identifier of a tunnel (English: Tunnel) in which the LSR is located.

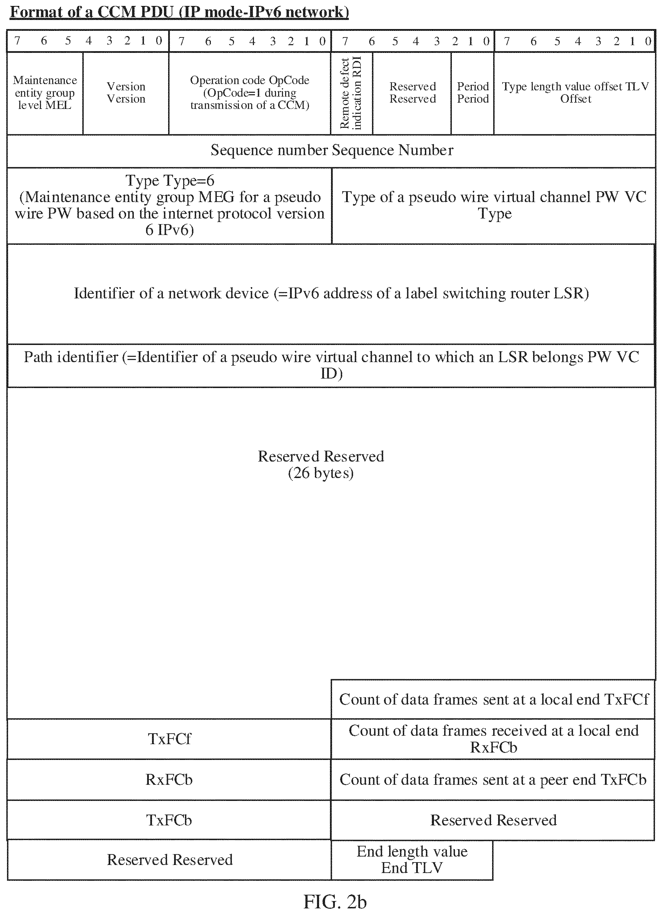

In another example, a format of a CCM PDU in a CCM generated by a network device in an IPv6 network is shown in FIG. 2b. In the CCM PDU, if a value of the type field is 6, it indicates that the CCM detects an MEG of a PW type and is applicable to the IPv6 network; a value of the network device identifier field is an LSR ID, and the LSR ID may be specifically a 128-bit IPv6 address of an LSR; and a value of the path identifier field is an identifier of a virtual channel (English: Virtual Channel, VC for short) of a PW.

In this way, the receiver network device can accurately read the identifier of the sender network device based on the indication information in the received OAM packet, to effectively implement an OAM function.

It should be noted that the network device in this embodiment of this application is any network device that can implement an OAM function, for example, may be a packet transport network (English: Packet Transport Network, PTN for short) device, a switch, or a router. This is not specifically limited in this embodiment of this application.

It may be understood that, the scenario is merely a scenario example provided in embodiments of this application, but embodiments of this application are not limited to the scenario.

With reference to the accompanying drawings, the following describes in detail a specific implementation of an OAM packet processing method in embodiments of this application by using embodiments.

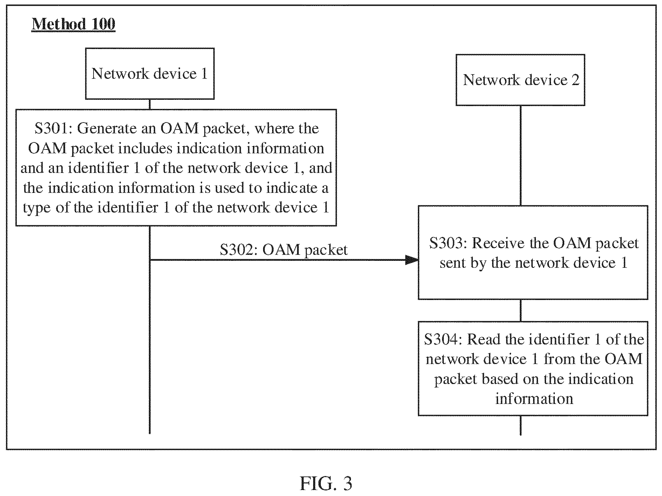

An embodiment of this application provides an OAM packet processing method 100. An IP mode of MPLS-TP OAM is used as an example. The method 100 is applicable to an IPv4 network, an IPv6 network, and a network including both IPv4 and IPv6. FIG. 3 is a schematic flowchart of an OAM packet processing method 100 according to an embodiment of this application. Refer to FIG. 3. The method 100 may include, for example, the following steps.

S301: A network device 1 generates an OAM packet, where the OAM packet includes indication information and an identifier 1 of the network device 1, and the indication information is used to indicate a type of the identifier 1 of the network device 1.

The network device 1 is an MEP that initiates an OAM packet in an MEG, and an MEP that receives and terminates the OAM packet in the MEG is a network device 2. The OAM packet is specifically a packet corresponding to an IP mode of MPLS-TP OAM.

The OAM packet includes an identifier 1 of a network device 1 and a path identifier 1, which are respectively used to notify a network device 2 that a network device that initiates OAM detection is the network device 1 and a path of OAM detection is a path 1, to ensure that effective OAM detection can be implemented based on the OAM packet. For example, the network device 1 is an LSR. The identifier 1 of the network device 1 may be an LSR ID, and the LSR ID is used to uniquely identify an LSR. The LSR ID may be, for example, an IP address of the LSR. If the LSR belongs to an IPv4 network, the LSR ID is an IPv4 address of the LSR. If the LSR belongs to an IPv6 network, the LSR ID is an IPv6 address of the LSR.

If the identifier 1 of the network device 1 is an IPv4 address, a field used to carry the identifier 1 of the network device 1 occupies at least 32-bit space in the OAM packet; or if the identifier 1 of the network device 1 is an IPv6 address, a field used to carry the identifier 1 of the network device 1 occupies at least 128-bit space in the OAM packet, to expand an application scope of MPLS-TP OAM, so that an OAM function is applicable to a plurality of scenarios such as an IPv4 network, an IPv6 network, and a network including an IPv4 and an IPv6. To enable the receiver network device to effectively obtain the identifier 1 of the network device 1, the OAM packet also carries indication information. The indication information is used to indicate a type of the identifier 1 of the network device 1, that is, the indication information may be used to indicate whether the OAM packet is an IPv4 network packet or an IPv6 network packet, or the indication information may indicate whether the identifier 1 of the network device 1 is an IPv6 address or an IPv4 address. In this way, the receiver network device can accurately obtain the identifier 1 of the network device 1 from the OAM packet based on the indication information, to implement effective OAM detection.

In an example, the indication information may be carried in a type field, and the type field is further used to indicate a type of an MEG. For example, if a value of the type field is 1, it indicates that the OAM detects an MEG of an LSP type, and the identifier 1 of the network device 1 initiating OAM detection is an IPv4 address; if a value of the type field is 2, it indicates that the OAM detects an MEG of a PW type, and the identifier 1 of the network device 1 initiating OAM detection is an IPv4 address; if a value of the type field is 3, it indicates that the OAM detects an MEG of a section type, and the identifier 1 of the network device 1 initiating OAM detection is an IPv4 address; if a value of the type field is 4, it indicates that the OAM detects an MEG of a ring type, and the identifier 1 of the network device 1 initiating OAM detection is an IPv4 address; if a value of the type field is 5, it indicates that the OAM detects an MEG of an LSP type, and the identifier 1 of the network device 1 initiating OAM detection is an IPv6 address; if a value of the type field is 6, it indicates that the OAM detects an MEG of a PW type, and the identifier 1 of the network device 1 initiating OAM detection is an IPv6 address; if a value of the type field is 7, it indicates that the OAM detects an MEG of a section type, and the identifier 1 of the network device 1 initiating OAM detection is an IPv6 address; or if a value of the type field is 8, it indicates that the OAM detects an MEG of a ring type, and the identifier 1 of the network device 1 initiating OAM detection is an IPv6 address. Based on this, when the value of the type field is any value in 1 to 4, it may indicate that the type of the identifier 1 of the network device 1 is the IPv4 address; and when the value of the type field is any value in 5 to 8, it may indicate that the type of the identifier 1 of the network device 1 is the IPv6 address.

In another example, the indication information may alternatively be carried in a reserved field. For example, at least one unoccupied bit in the reserved field is used to carry the indication information. It should be noted that the reserved field is a space of 16 bits (a zeroth bit to a fifteenth bit), and currently an eighth bit and a twelfth bit are occupied to represent a service type of a PW. Based on this, the indication information may be specifically at least one of an eighth bit, a ninth bit, a tenth bit, an eleventh bit, a thirteenth bit, a fourteenth bit, and a fifteenth bit. When the at least one bit is a first value, it indicates that the type of the identifier 1 of the network device 1 is an IPv4 address; or when the at least one bit is a second value, it indicates that the type of the identifier 1 of the network device 1 is an IPv6 address. In a case, for example, an eighth bit of the reserved field carries the indication information. The first value is 0, and the second value is 1. In this case, when a value of the eighth bit of the reserved field is 0, it indicates that the type of the identifier 1 of the network device 1 is an IPv4 address; or when a value of the eighth bit of the reserved field is 1, it indicates that the type of the identifier 1 of the network device 1 is an IPv6 address. In another case, for example, the eighth bit and the ninth bit of the reserved field carry the indication information. The first value is 00, and the second value is 11. In this case, when values of the eighth bit and the ninth bit of the reserved field are 00, it indicates that the type of the identifier 1 of the network device 1 is an IPv4 address; or when values of the eighth bit and the ninth bit of the reserved field are 11, it indicates that the type of the identifier 1 of the network device 1 is an IPv6 address. In still another case, for example, the eighth bit to the eleventh bit of the reserved field carry the indication information. The first value is 0, and the second value is 1. In this case, when the eighth bit to the eleventh bit of the reserved field are 0000 (a value of 0), it indicates that the type of the identifier 1 of the network device 1 is an IPv4 address; or when the eighth bit to the eleventh bit of the reserved field are 0001 (a value of 1), it indicates that the type of the identifier 1 of the network device 1 is an IPv6 address.

In a case in which the type field carries the indication information, a format of the OAM PDU is described by using an example in which a path type detected in the CCM is an LSP type, a section type, a PW type, or a ring type.

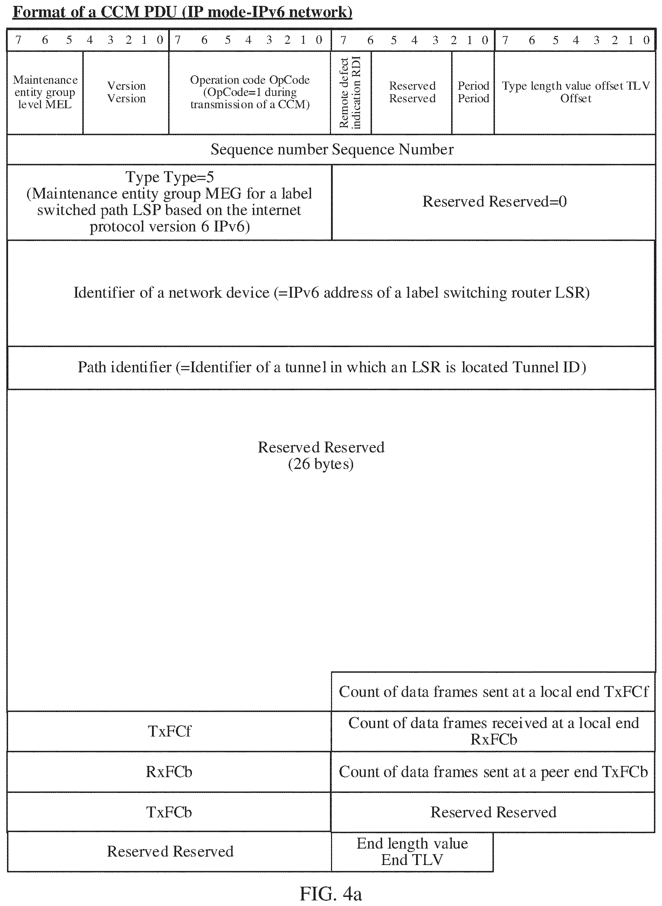

When the detected path type is the LSP type, if the identifier 1 of the network device 1 is an IPv4 address of the network device 1, for details about the OAM PDU, reference is made to FIG. 2a. If Type field=1, it indicates that the OAM detects an MEG of the LSP type and the type of the identifier 1 of the network device 1 is an IPv4 address. Field (represented as an LSR ID in the figure) of the identifier 1 of the network device 1=32-bit IPv4 address of the network device 1. Field (represented as an LSP ID in the figure) of the path identifier 1=Identifier of a tunnel in which the network device 1 is located. If the identifier 1 of the network device 1 is an IPv6 address of the network device 1, for details about the OAM PDU, reference is made to FIG. 4a. If Type field=5, it indicates that the OAM detects an MEG of the LSP type and the type of the identifier 1 of the network device 1 is an IPv6 address. LSR ID=128-bit IPv6 address of the network device 1. Field (represented as an LSP ID in the figure) of the path identifier 1=Identifier of a tunnel in which the network device 1 is located.

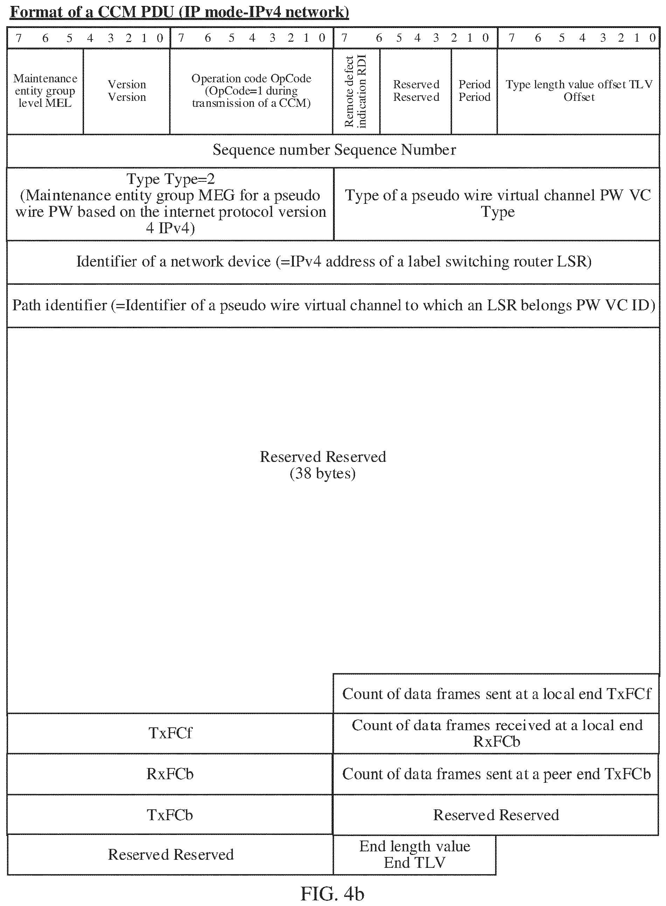

When the detected path type is the PW type, if the identifier 1 of the network device 1 is an IPv4 address of the network device 1, for details about the OAM PDU, reference is made to FIG. 4b. If Type field=2, it indicates that the OAM detects an MEG of the PW type and the type of the identifier 1 of the network device 1 is an IPv4 address. Field (represented as an LSR ID in the figure) of the identifier 1 of the network device 1=32-bit IPv4 address of the network device 1. Field (represented as a PW VC ID in the figure) of the path identifier 1=Identifier of a PW VC in which the network device 1 is located. If the identifier 1 of the network device 1 is an IPv6 address of the network device 1, for details about the OAM PDU, reference is made to FIG. 2b. If Type field=6, it indicates that the OAM detects an MEG of the PW type and the type of the identifier 1 of the network device 1 is an IPv6 address. LSR ID=128-bit IPv6 address of the network device 1. Field (represented as a PW VC ID in the figure) of the path identifier 1=Identifier of a PW VC in which the network device 1 is located. The eighth bit and the twelfth bit of the reserved field are occupied to indicate a type of the PW VC (that is, indicate a service type of the PW). In this scenario, the reserved field is also referred to as a PW VC type field.

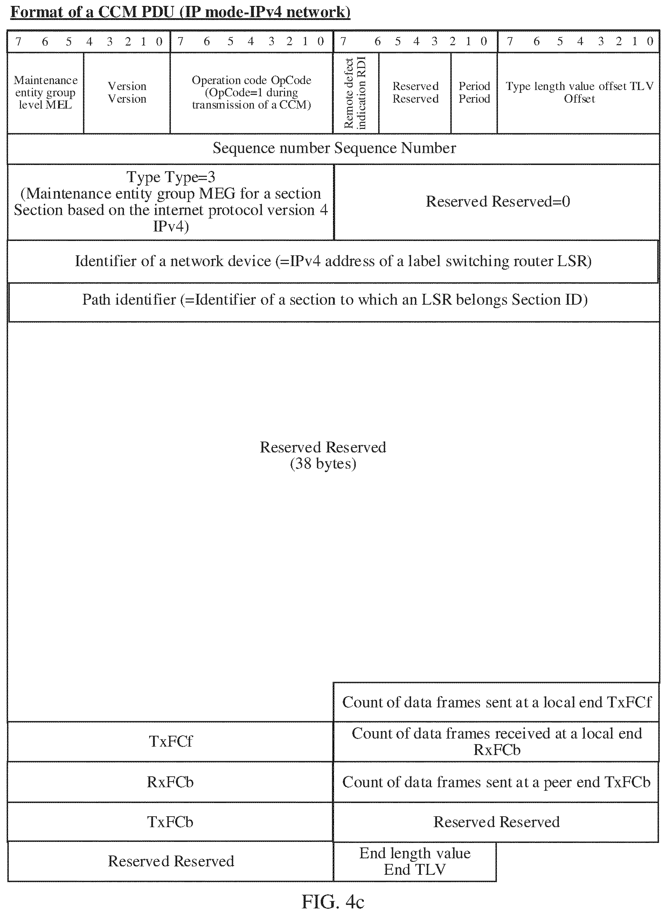

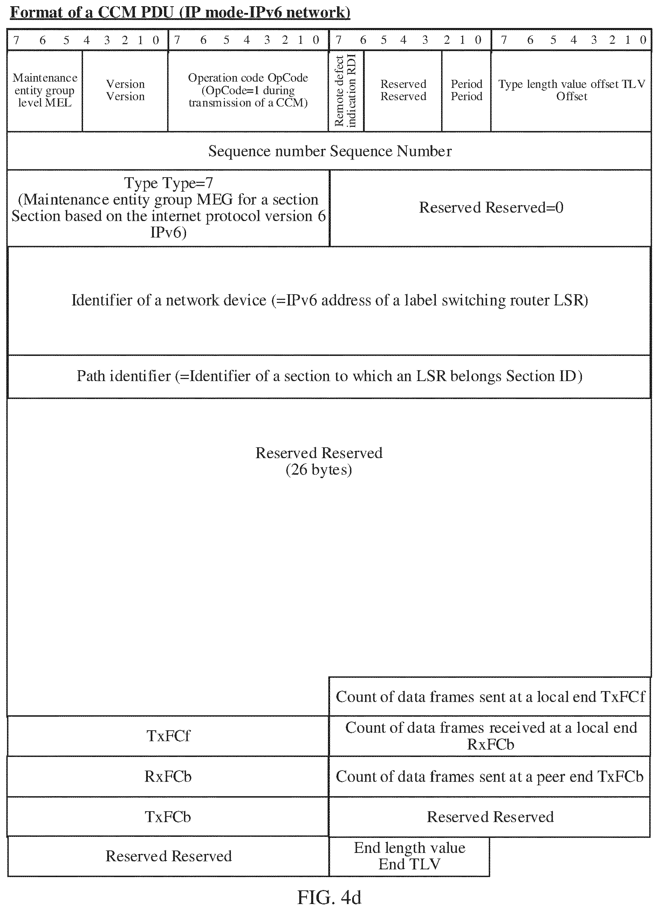

When the detected path type is the section type, if the identifier 1 of the network device 1 is an IPv4 address of the network device 1, for details about the OAM PDU, reference is made to FIG. 4c. If Type field=3, it indicates that the OAM detects an MEG of the section type and the type of the identifier 1 of the network device 1 is an IPv4 address. Field (represented as an LSR ID in the figure) of the identifier 1 of the network device 1=32-bit IPv4 address of the network device 1. Field (represented as a section ID in the figure) of the path identifier 1=Identifier of a section to which the network device 1 belongs. If the identifier 1 of the network device 1 is an IPv6 address of the network device 1, for details about the OAM PDU, reference is made to FIG. 4d. If Type field=7, it indicates that the OAM detects an MEG of the section type and the type of the identifier 1 of the network device 1 is an IPv6 address. LSR ID=128-bit IPv6 address of the network device 1. Field (represented as a section ID in the figure) of the path identifier 1=Identifier of a section to which the network device 1 belongs.

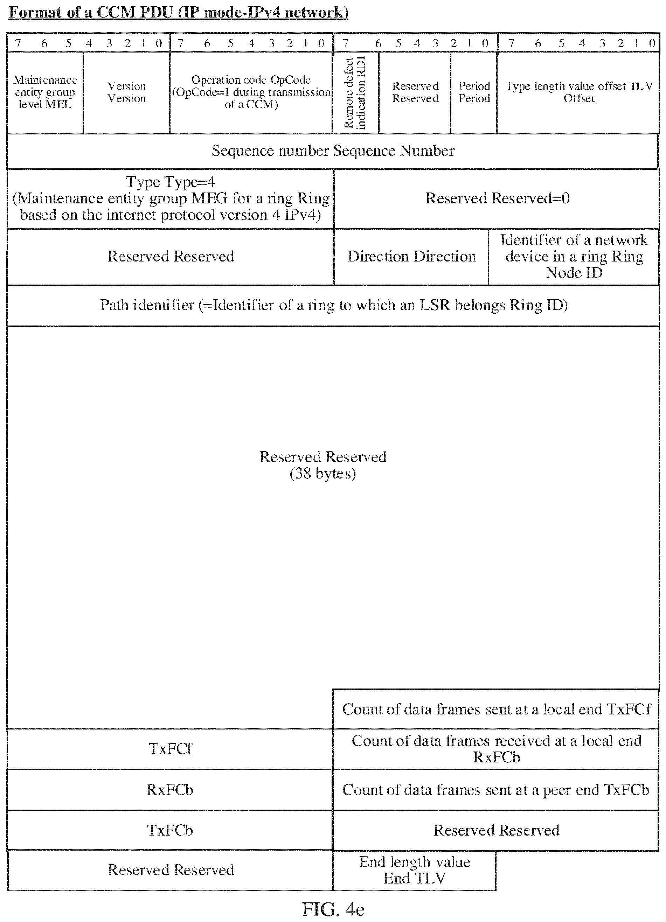

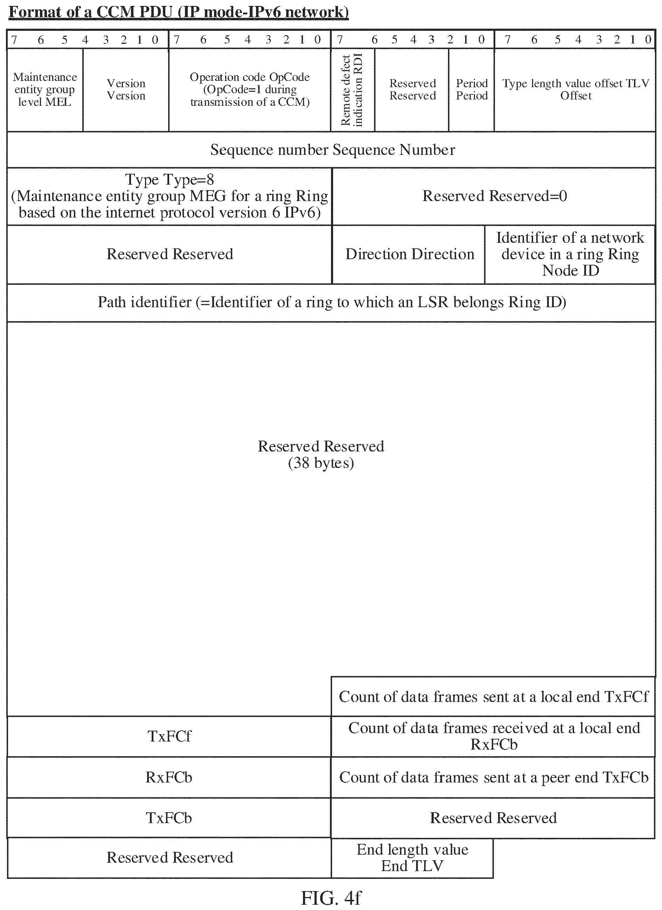

When the detected path type is the ring type, if the identifier 1 of the network device 1 is an IPv4 address of the network device 1, for details about the OAM PDU, reference is made to FIG. 4e. If Type field=4, it indicates that the OAM detects an MEG of the ring type and the type of the identifier 1 of the network device 1 is an IPv4 address. The identifier 1 of the network device 1 is represented by the identifier 1 (represented as a ring node ID in the figure) of the network device 1 and a direction in a ring, that is, the OAM PDU includes an 8-bit direction (English: Direction) field and an 8-bit ring node ID field. Field (represented as a ring ID in the figure) of the path identifier 1=Identifier of a ring to which the network device 1 belongs. If the identifier 1 of the network device 1 is an IPv6 address of the network device 1, for details about the OAM PDU, reference is made to FIG. 4f. If Type field=8, it indicates that the OAM detects an MEG of the ring type and the type of the identifier 1 of the network device 1 is an IPv6 address. The LSR ID is represented by a direction field and a ring node ID field. Field (represented as a ring ID in the figure) of the path identifier 1=Identifier of a ring to which the network device 1 belongs.

In a case in which the reserved field carries the indication information, it is assumed that the eighth bit of the reserved field is used to carry the indication information. A format of the OAM PDU is described by using an example in which a path type detected in the CCM is an LSP type, a section type, a PW type, and a ring type.

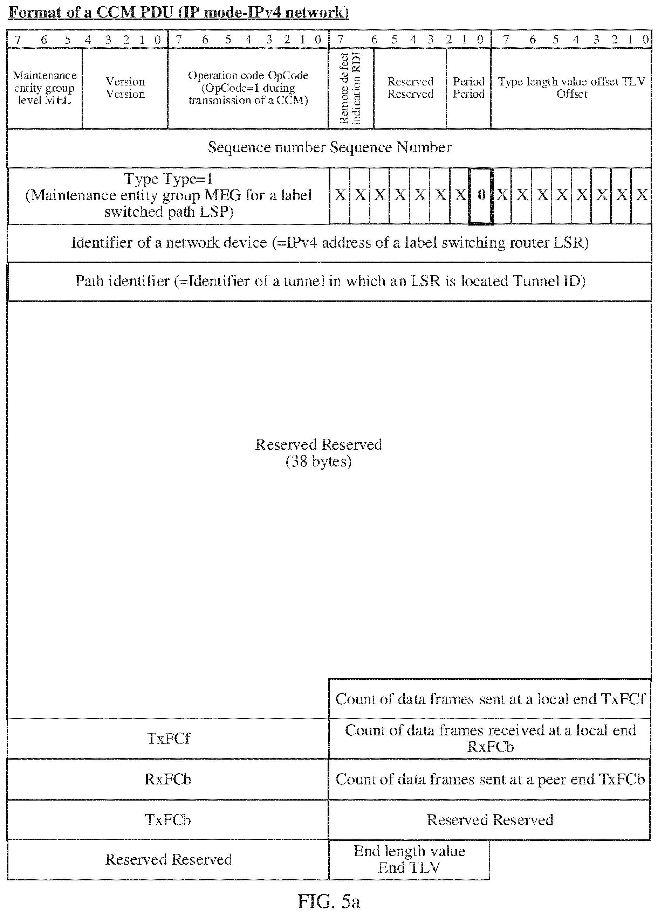

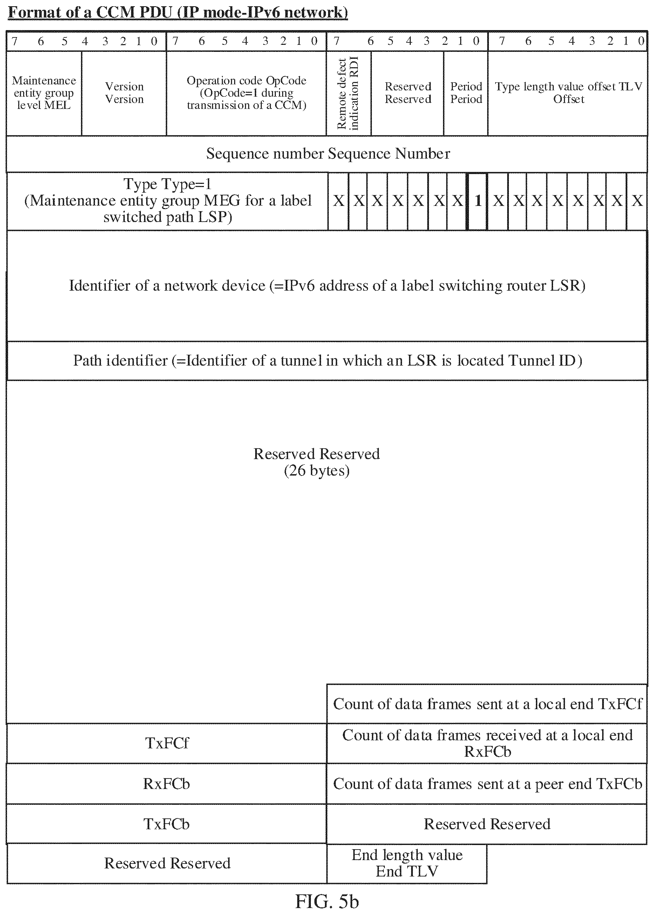

When the detected path type is an LSP, if Type field=1, it indicates that the OAM detects an MEG of an LSP type. If the identifier 1 of the network device 1 is an IPv4 address of the network device 1, for details about the OAM PDU, reference is made to FIG. 5a. If Eighth bit of the reserved field=0, it indicates that the type of the identifier 1 of the network device 1 is an IPv4 address. Field (represented as an LSR ID in the figure) of the identifier 1 of the network device 1=32-bit IPv4 address of the network device 1. Field (represented as an LSP ID in the figure) of the path identifier 1=Identifier of a tunnel in which the network device 1 is located. If the identifier 1 of the network device 1 is an IPv6 address of the network device 1, for details about the OAM PDU, reference is made to FIG. 5b. If Eighth bit of the reserved field=1, it indicates that the type of the identifier 1 of the network device 1 is an IPv6 address. LSR ID=128-bit IPv6 address of the network device 1. Field (represented as an LSP ID in the figure) of the path identifier 1=Identifier of a tunnel in which the network device 1 is located.

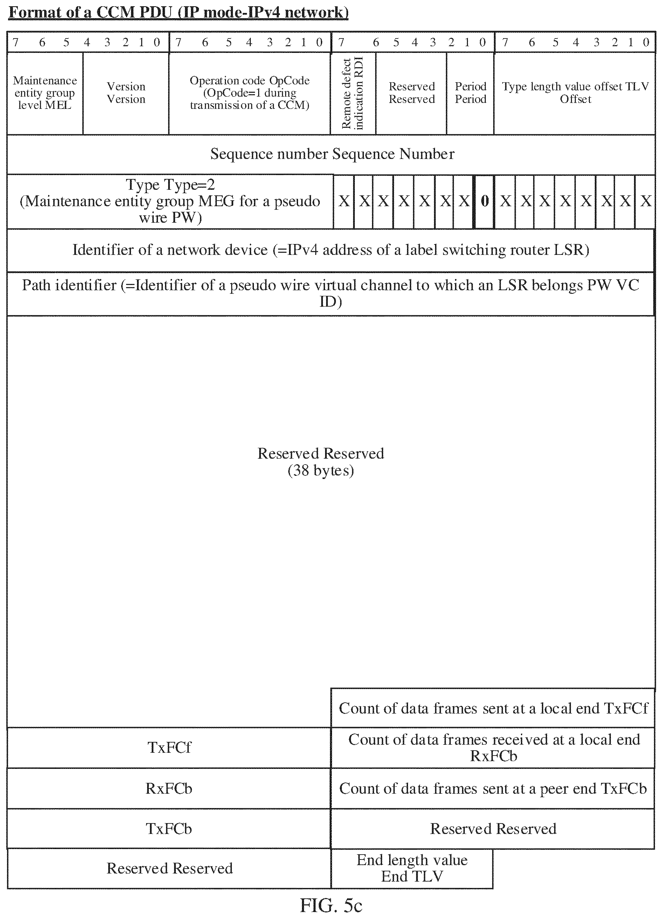

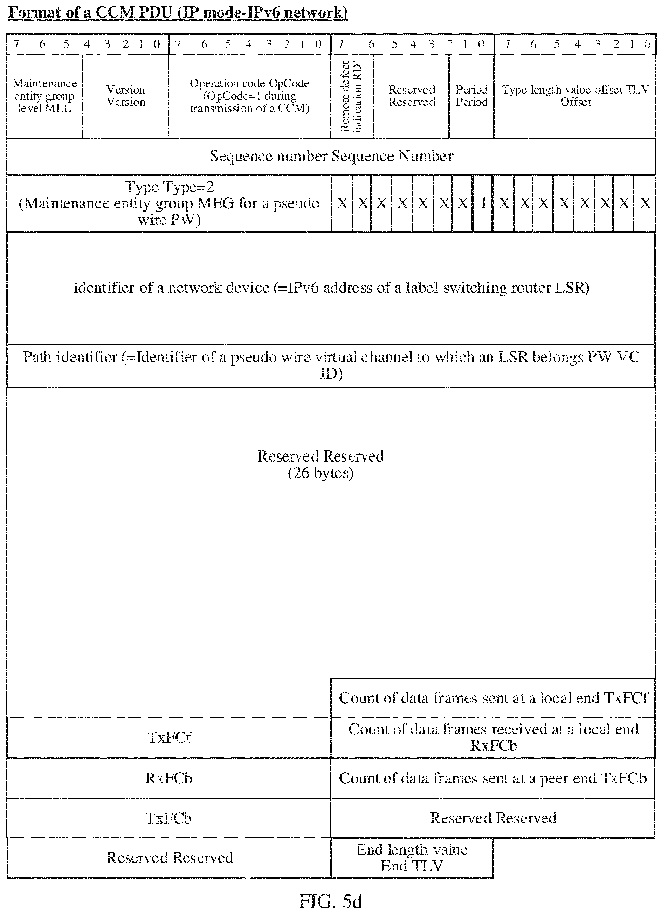

When the detected path type is the PW type, if Type field=2, it indicates that the OAM detects an MEG of the PW type. If the identifier 1 of the network device 1 is an IPv4 address of the network device 1, for details about the OAM PDU, reference is made to FIG. 5c. If Eighth bit of the reserved field=0, it indicates that the type of the identifier 1 of the network device 1 is an IPv4 address. Field (represented as an LSR ID in the figure) of the identifier 1 of the network device 1=32-bit IPv4 address of the network device 1. Field (represented as a PW VC ID in the figure) of the path identifier 1=Identifier of a PW VC in which the network device 1 is located. If the identifier 1 of the network device 1 is an IPv6 address of the network device 1, for details about the OAM PDU, reference is made to FIG. 5d. If Eighth bit of the reserved field=1, it indicates that the type of the identifier 1 of the network device 1 is an IPv6 address. LSR ID=128-bit IPv6 address of the network device 1. Field (represented as a PW VC ID in the figure) of the path identifier 1=Identifier of a PW VC in which the network device 1 is located. The eighth bit and the twelfth bit of the reserved field are occupied to indicate a type of the PW VC (that is, indicate a service type of the PW). In this scenario, the reserved field is also referred to as a PW VC type field.

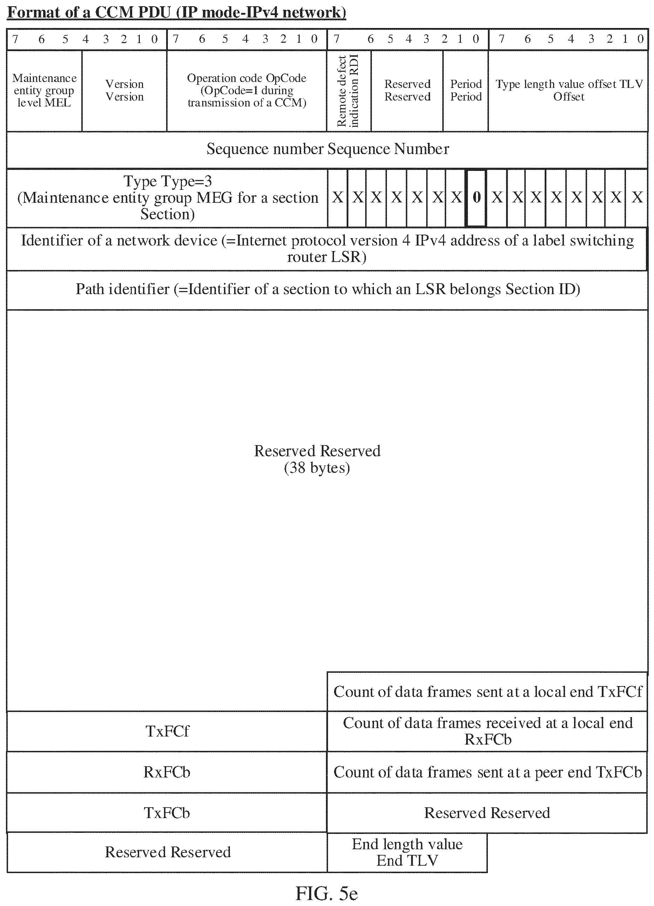

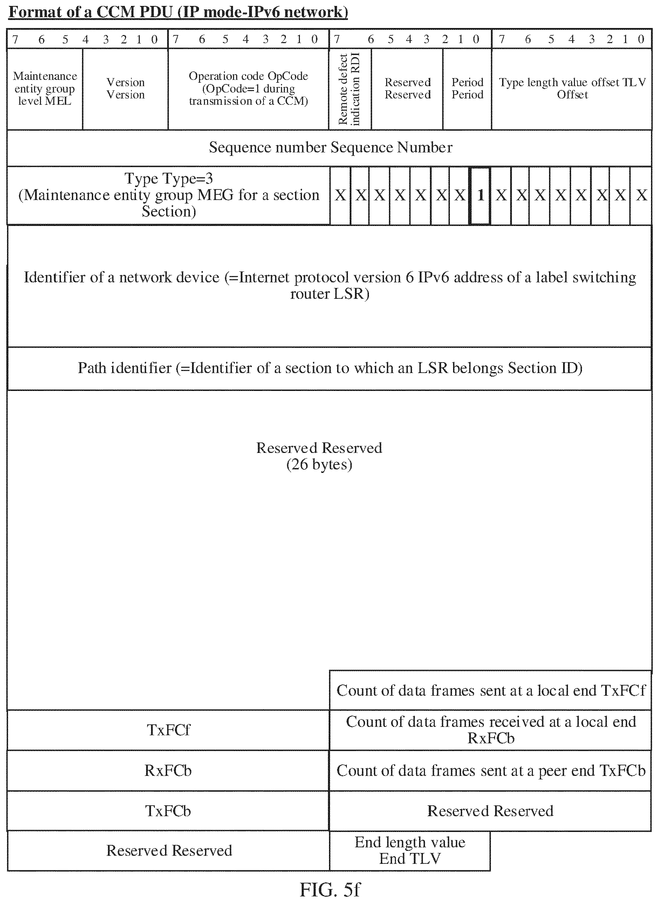

When the detected path type is a section type, if Type field=3, it indicates that the OAM detects an MEG of the section type. If the identifier 1 of the network device 1 is an IPv4 address of the network device 1, for details about the OAM PDU, reference is made to FIG. 5e. If Eighth bit of the reserved field=0, it indicates that the type of the identifier 1 of the network device 1 is an IPv4 address. Field (represented as an LSR ID in the figure) of the identifier 1 of the network device 1=32-bit IPv4 address of the network device 1. Field (represented as a section ID in the figure) of the path identifier 1=Identifier of a section to which the network device 1 belongs. If the identifier 1 of the network device 1 is an IPv6 address of the network device 1, for details about the OAM PDU, reference is made to FIG. 5f. If Eighth bit of the reserved field=1, it indicates that the type of the identifier 1 of the network device 1 is an IPv6 address. LSR ID=128-bit IPv6 address of the network device 1. Field (represented as a section ID in the figure) of the path identifier 1=Identifier of a section to which the network device 1 belongs.

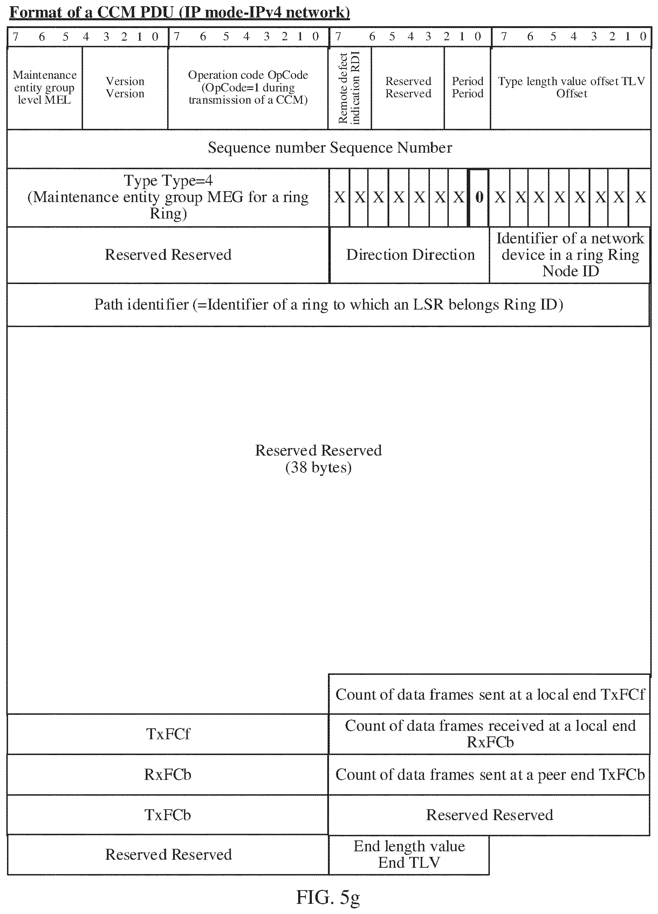

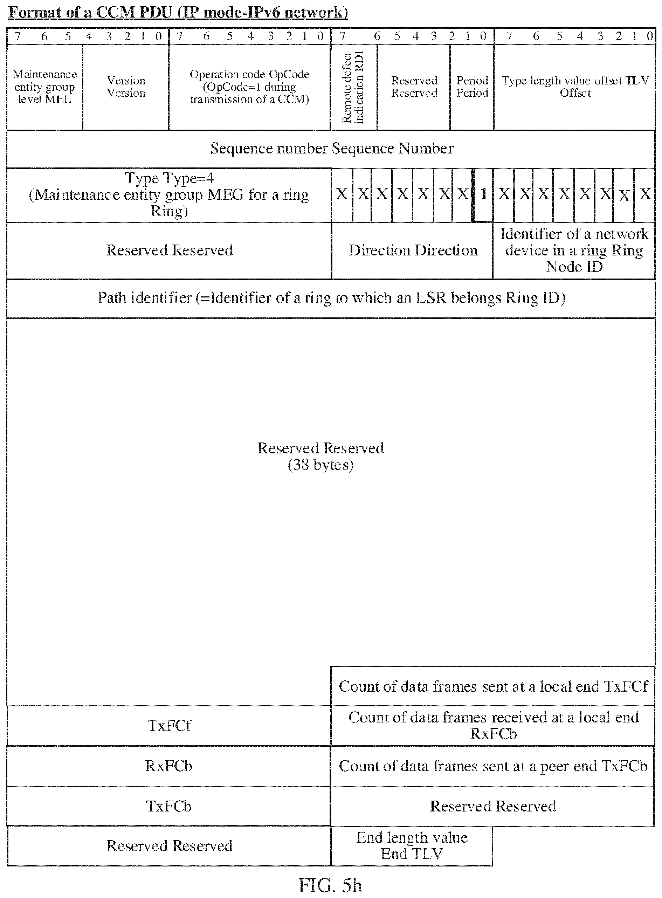

When the detected path type is a ring type, if Type field=4, it indicates that the OAM detects an MEG of the ring type. If the identifier 1 of the network device 1 is an IPv4 address of the network device 1, for details about the OAM PDU, reference is made to FIG. 5g. If Eighth bit of the reserved field is 0, it indicates that the type of the identifier 1 of the network device 1 is an IPv4 address. The identifier 1 of the network device 1 is represented by a direction field and a ring node ID field. Field (represented as a ring ID in the figure) of the path identifier 1=Identifier of a ring to which the network device 1 belongs. If the identifier 1 of the network device 1 is an IPv6 address of the network device 1, for details about the OAM PDU, reference is made to FIG. 5h. If Eighth bit of the reserved field=1, it indicates that the type of the identifier 1 of the network device 1 is an IPv6 address. The LSR ID is represented by a direction field and a ring node ID field. Field (represented as a ring ID in the figure) of the path identifier 1=Identifier of a ring to which the network device 1 belongs.

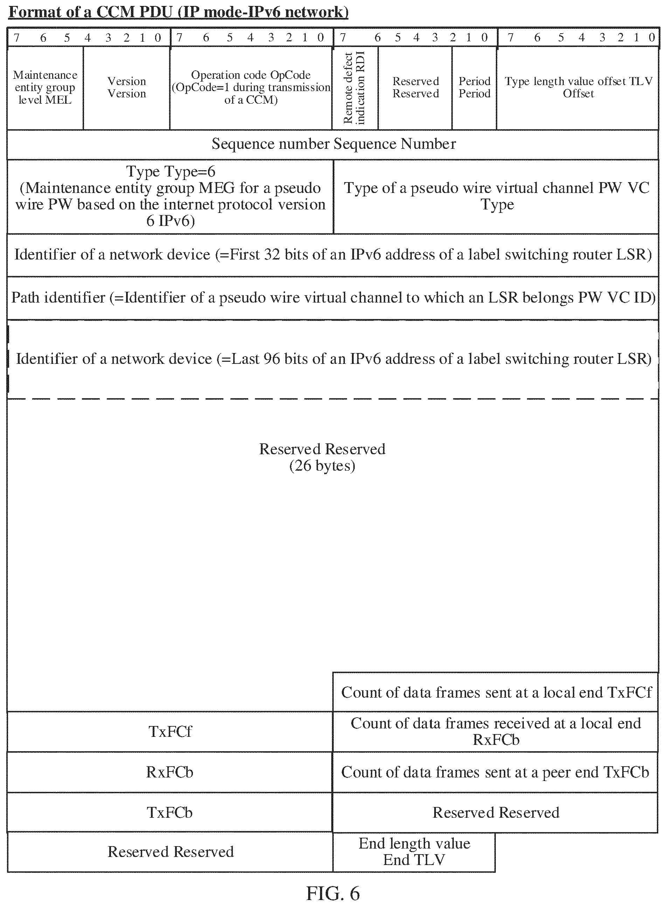

It should be noted that, in the foregoing example, the identifier 1 of the network device 1 occupies continuous space of the OAM PDU in the OAM packet, and a field that carries the identifier 1 of the network device 1 is adjacent to a field that carries the path identifier 1. In some other possible implementations, in order not to extend a length of the field that carries the identifier 1 of the network device 1 in the current IP mode, when the network device 1 is a network device in an IPv6 network, the 128-bit identifier 1 of the network device 1 may be segmented into the first 32 bits and the last 96 bits, where the first 32 bits are stored in the field that carries the identifier 1 of the network device 1 in the current IP mode, and the last 96 bits of the IPv6 address are stored in a reserved field after a field that carries the path identifier 1. The scenario shown in FIG. 2b is used as an example. For example, for a format of the OAM PDU in this implementation, refer to FIG. 6.

In this way, the network device 1 generates the OAM packet that carries the indication information, so that it is possible that an OAM mechanism is applicable to more extensive application scenarios.

S302: The network device 1 sends the OAM packet to the network device 2.

S303: The network device 2 receives the OAM packet sent by the network device 1.

In this embodiment of this application, an occasion, a rule, and a specific sending manner of sending the OAM packet by the network device 1 to the network device 2 are not limited.

S304: The network device 2 reads the identifier 1 of the network device 1 from the OAM packet based on the indication information.

In a specific implementation, after receiving the OAM packet, the network device 2 obtains the indication information from the OAM packet, and accurately reads the identifier 1 of the network device 1 from the OAM packet based on an indication of the indication information. In an example, when the indication information is used to indicate that the type of the identifier 1 of the network device 1 is an IPv6 address, S304 may be that the network device 2 reads the IPv6 address of the network device 1 from the OAM packet. In another example, when the indication information is used to indicate that the type of the identifier 1 of the network device 1 is an IPv4 address, S304 may be that the network device 2 reads the IPv4 address of the network device 1 from the OAM packet.

For example, it is assumed that a format of an OAM PDU in the OAM packet is shown in FIG. 2a, FIG. 4b, FIG. 4c, or FIG. 4e. S304 may specifically mean that the network device 2 parses the OAM packet to obtain a value of the type field, and determines, based on the value of the type field, that the type of the identifier 1 of the network device 1 that initiates the OAM packet is an IPv4 address. In this case, the network device 2 reads, from the OAM packet, 32-bit information that is before the field used to carry the path identifier 1 and that is adjacent to the field, and uses the information as the identifier 1 of the network device 1, that is, the IPv4 address of the network device 1. It is assumed that a format of an OAM PDU in the OAM packet is shown in FIG. 4a, FIG. 2b, FIG. 4d, or FIG. 4f. S304 may specifically mean that the network device 2 parses the OAM packet to obtain a value of the type field, and determines, based on the value of the type field, that the type of the identifier 1 of the network device 1 that initiates the OAM packet is an IPv6 address. In this case, the network device 2 reads, from the OAM packet, 128-bit information that is before the field used to carry the path identifier 1 and that is adjacent to the field, and uses the information as the identifier 1 of the network device 1, that is, the IPv6 address of the network device 1. In addition, it is assumed that a format of an OAM PDU in the OAM packet is shown in FIG. 6. S304 may specifically mean that the network device 2 parses the OAM packet to obtain a value of the type field, and determines, based on the value of the type field, that the type of the identifier 1 of the network device 1 that initiates the OAM packet is an IPv6 address. In this case, the network device 2 reads, from the OAM packet, 32-bit information that is before the field used to carry the path identifier 1 and that is adjacent to the field, and 96-bit information that is after the field used to carry the path identifier 1 and that is adjacent to the field, and combines the 32-bit information and the 96-bit information to obtain the identifier 1 of the network device 1, that is, the IPv6 address of the network device 1.

For example, it is assumed that a format of an OAM PDU in the OAM packet is shown in FIG. 5a, FIG. 5c, FIG. 5e, or FIG. 5g. S304 may specifically mean that the network device 2 parses the OAM packet to obtain a value of the eighth bit of the reserved field, and determines, based on the value of the eighth bit of the reserved field, that the type of the identifier 1 of the network device 1 that initiates the OAM packet is an IPv4 address. In this case, the network device 2 reads, from the OAM packet, 32-bit information that is after the reserved field and that is before the field used to carry the path identifier 1, and uses the information as the identifier 1 of the network device 1, that is, the IPv4 address of the network device 1. It is assumed that a format of an OAM PDU in the OAM packet is shown in FIG. 5b, FIG. 5d, FIG. 5f, or FIG. 5h. S304 may specifically mean that the network device 2 parses the OAM packet to obtain a value of the eighth bit of the reserved field, and determines, based on the value of the eighth bit of the reserved field, that the type of the identifier 1 of the network device 1 that initiates the OAM packet is an IPv6 address. In this case, the network device 2 reads, from the OAM packet, 128-bit information that is after the reserved field and that is before the field used to carry the path identifier 1, and uses the information as the identifier 1 of the network device 1, that is, the IPv6 address of the network device 1.

It should be noted that in this embodiment of this application, an example in which the OAM packet is a CCM is used for description. Other OAM packets such as an LMM and an LMR packet are all applicable to the OAM packet processing method provided in this embodiment of this application. To be specific, the indication information used to indicate the type of the identifier of the network device is carried in the OAM packet, so that an OAM mechanism is applicable to more network scenarios. For specific implementations of all types of OAM packets, refer to related descriptions of the CCM packet. Details are not described again in this embodiment of this application.

It should be noted that the network device 2 may implement OAM detection on the MEG from the network device 1 to the network device 2 based on the received OAM packet. A specific detection principle and implementation are not improvement points in this embodiment of this application, and are not described in detail in this embodiment of this application.

It can be learned that, according to the method 100 provided in this embodiment of this application, the OAM packet generated by the sender network device includes the indication information, and the indication information is used to indicate the type of the identifier of the sender network device, that is, indicate whether the identifier of the sender network device is an IPv4 address or an IPv6 address. When the indication information carried in the OAM packet indicates that an IP address of the sender network device is the IPv4 address, the identifier that is of the sender network device and that is included in the OAM packet is the IPv4 address of the sender network device. When the indication information carried in the OAM packet indicates that an IP address of the sender network device is the IPv6 address, the identifier that is of the sender network device and that is included in the OAM packet is the IPv6 address of the sender network device. In this way, a receiver network device that receives the OAM packet can determine, based on the indication information, the type of the identifier that is of the sender network device and that is carried in the OAM packet, and accurately read the identifier of the sender network device from the OAM packet. Therefore, a user can perform MPLS-TP OAM to reduce a configuration workload, and can also implement MPLS-TP OAM in a plurality of scenarios such as an IPv4 network, an IPv6 network, and a network including IPv4 and IPv6, to expand an application scope of MPLS-TP OAM, and improve use experience of the user.

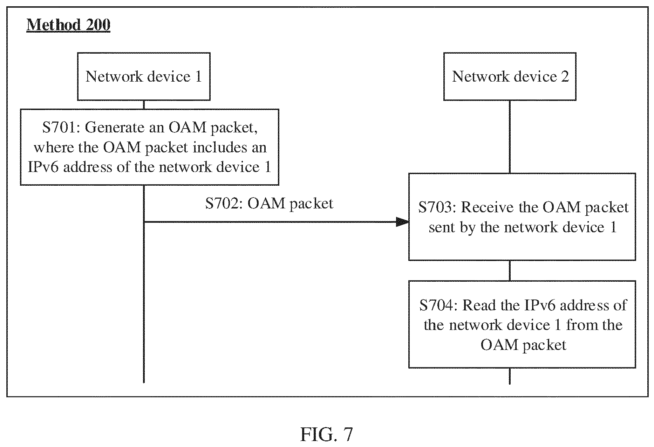

FIG. 7 is a schematic flowchart of an OAM packet processing method 200 according to an embodiment of this application. Refer to FIG. 7. An IP mode of MPLS-TP OAM is used as an example. The method 200 is applicable to an IPv6 network. The method 200 may include, for example, the following steps.

S701: A network device 1 generates an OAM packet, where the OAM packet includes an IPv6 address of the network device 1.

Because a type of an identifier of the network device 1 is the IPv6 address, an identifier 1 that is of the network device 1 and that is carried in the OAM packet needs to occupy 128-bit space. To be applicable to an MPLS-TP OAM mechanism in an IPv6 network, the OAM packet generated by the network device 1 needs to include 128-bit space used to carry the identifier 1 of the network device 1.

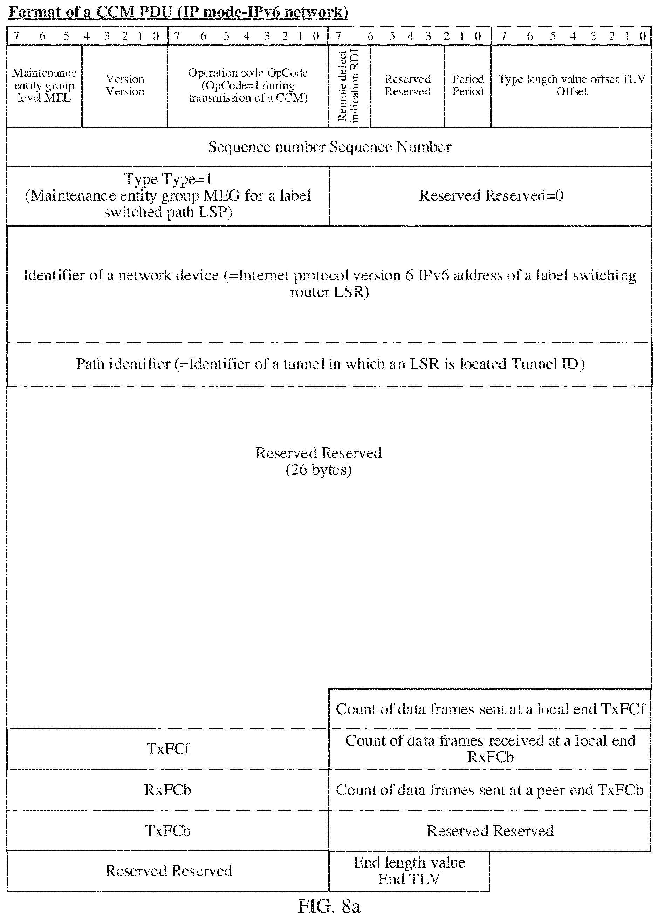

In an example, a field that carries the identifier 1 of the network device 1 may be extended in the OAM packet, and is extended from 32 bits to 128 bits, to carry the IPv6 address of the network device 1. The scenario corresponding to FIG. 4a is used as an example. For example, for an OAM PDU in the OAM packet generated based on the method 200, refer to FIG. 8a.

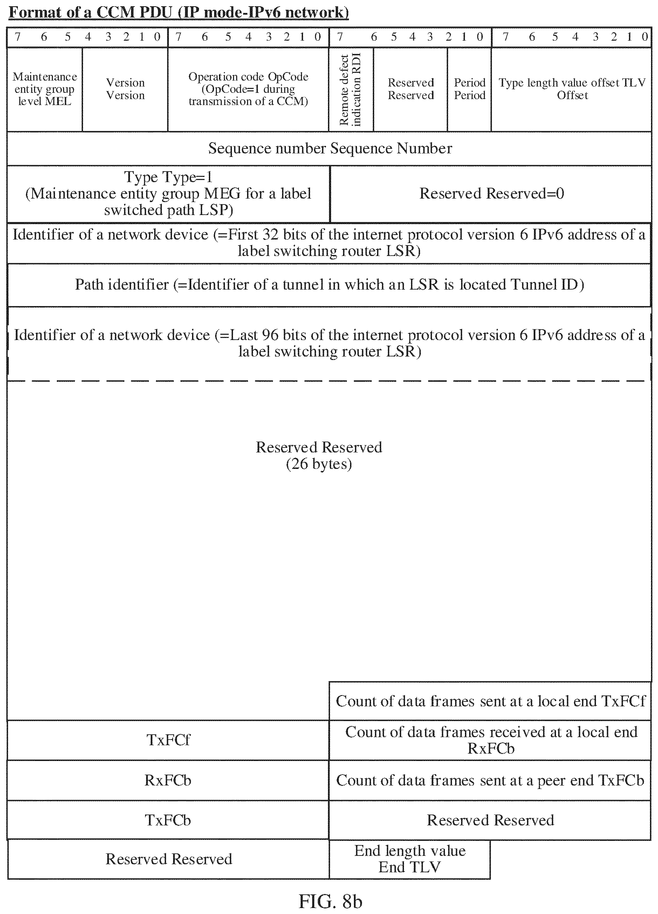

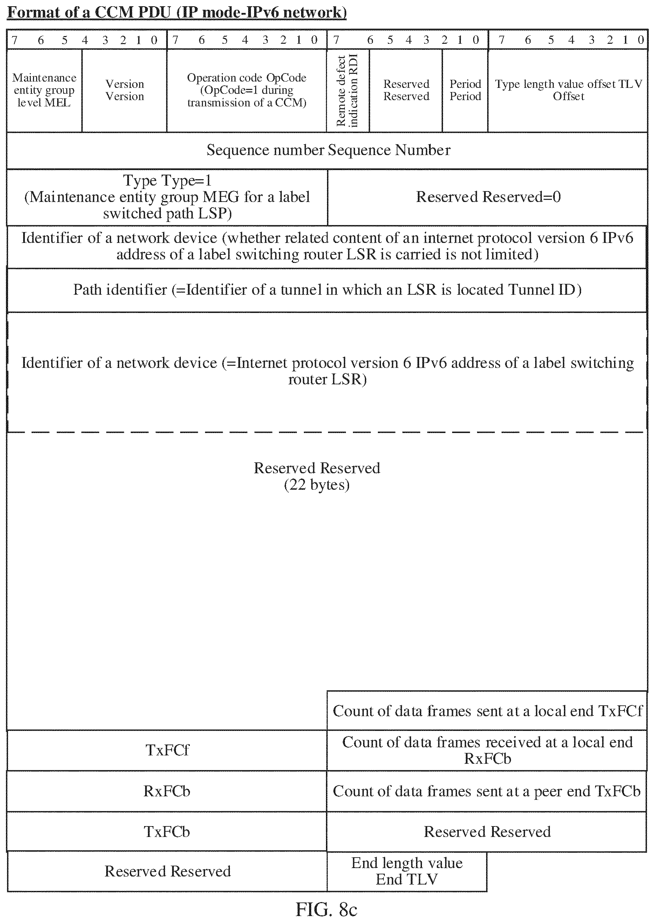

In another example, in the OAM packet, a field that carries the identifier 1 of the network device 1 is not extended, but 96 bits of the reserved field after the field used to carry the path identifier 1 are used to carry the last 96 bits of the IPv6 address of the network device 1, or 128 bits of the reserved field after the field used to carry the path identifier 1 are used to carry the IPv6 address of the network device 1. The scenario corresponding to FIG. 4a is still used as an example. For example, for the OAM PDU in the OAM packet generated according to the method 200, refer to FIG. 8b or FIG. 8c. In FIG. 8b, the field originally used to carry the identifier 1 of the network device 1 carries the first 32 bits of the IPv6 address of the network device 1, and the reserved field carries the last 96 bits of the IPv6 address of the network device 1. In FIG. 8c, a value of the field originally used to carry the identifier 1 of the network device 1 is not limited, and the reserved field carries 128 bits of the IPv6 address of the network device 1.

It should be noted that the OAM packet may further include a path identifier 1, used to indicate a path type of OAM detection. The path type may be, for example, an LSP type, a PW type, a section type, or a ring type. In this case, the path identifier 1 may be any one of the following identifiers: an LSP identifier, a section identifier, a PW identifier, or a ring identifier.

S702: The network device 1 sends the OAM packet to the network device 2.

S703: The network device 2 receives the OAM packet sent by the network device 1.

S704: The network device 2 reads the IPv6 address of the network device 1 from the OAM packet.

In a specific implementation, after receiving the OAM packet, the network device 2 reads the identifier 1 of the network device 1 from the OAM packet, that is, reads the 128-bit IPv6 address of the network device 1 from the OAM packet.

In this embodiment, the OAM packet may further include indication information, which is used to indicate a type of the identifier of the network device 1, and is specifically used to indicate whether the OAM packet is an IPv4 network packet or an IPv6 network packet. For a manner of carrying the indication information in the OAM packet, refer to related descriptions of the indication information in the embodiment shown in FIG. 3.

It can be learned that, according to the method 200 provided in this embodiment of this application, the OAM packet generated by the sender network device includes the IPv6 address of the network device 1 that is used as the identifier 1 of the network device 1. In this way, a receiver network device that receives the OAM packet can accurately read the identifier of the sender network device from the OAM packet. Therefore, a user can perform MPLS-TP OAM in an IP mode to reduce a configuration workload, and can also implement MPLS-TP OAM in an IPv6 network scenario to improve use experience of the user.

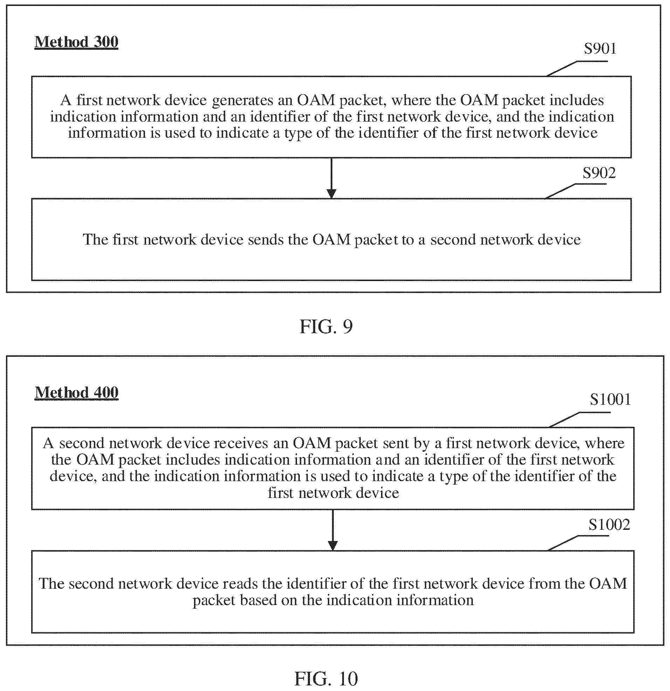

FIG. 9 is a schematic flowchart of an OAM packet processing method 300 according to an embodiment of this application. Refer to FIG. 9. For an IP mode of MPLS-TP OAM, the method 300 is performed by a first network device. The method 300 may include, for example, the following steps.

S901: A first network device generates an OAM packet, where the OAM packet includes indication information and an identifier of the first network device, and the indication information is used to indicate a type of the identifier of the first network device.

S902: The first network device sends the OAM packet to a second network device.

The first network device may be the network device 1 in the method 100, and the second network device is the network device 2 in the method 100. For specific operations performed by the first network device, refer to the operations performed by the network device 1 in the method 100. The OAM packet may be the OAM packet in the method 100, the indication information may be the indication information in the method 100, and the identifier of the first network device may be the identifier 1 of the network device 1 in the method 100.

In an example, the indication information in the OAM packet is used to indicate that the type of the identifier of the first network device is an IPv6 address. This ensures that the method 300 is applicable to an IPv6 network.

In another example, the indication information in the OAM packet is used to indicate that the type of the identifier of the first network device is an IPv4 address. This ensures that the method 300 is applicable to an IPv4 network.

In some possible implementations, the OAM packet includes a type field used to indicate an MEG type, and the type field may be used to carry the indication information. In a specific implementation, if a value of the type field is a first value, the indication information is used to indicate that the type of the identifier of the first network device is the IPv6 address; or if a value of the type field is a second value, the indication information is used to indicate that the type of the identifier of the first network device is the IPv4 address.

In some other possible implementations, the OAM packet includes a reserved field, and at least one bit in the reserved field may be used to carry the indication information. In a specific implementation, if the at least one bit in the reserved field is a first value, the indication information is used to indicate that the type of the identifier of the first network device is the IPv6 address; or if the at least one bit in the reserved field is a second value, the indication information is used to indicate that the type of the identifier of the first network device is the IPv4 address.

In an example, the OAM packet may further include an identifier of a path from the first network device to the second network device. The identifier of the path may be any one of the following identifiers: a label switched path LSP identifier, a section Section identifier, a pseudo wire PW identifier, or a ring Ring identifier. Specifically, a field that is in the OAM packet and that is used to carry the identifier of the path may be adjacent to a field used to carry the identifier of the first network device. In this way, the receiver can accurately complete OAM detection based on the identifier of the path and the identifier of the first network device.

It should be noted that the OAM packet in this embodiment of this application is specifically a packet corresponding to an IP mode of MPLS-TP OAM.

It can be learned that, according to the method 300 provided in this embodiment of this application, the OAM packet generated by the first network device includes the indication information, and the indication information is used to indicate the type of the identifier of the first network device, that is, indicate whether the identifier of the first network device is an IPv4 address or an IPv6 address. When the indication information carried in the OAM packet indicates that an IP address of the first network device is the IPv4 address, the identifier that is of the first network device and that is included in the OAM packet is the IPv4 address of the first network device. When the indication information carried in the OAM packet indicates that an IP address of the first network device is the IPv6 address, the identifier that is of the first network device and that is included in the OAM packet is the IPv6 address of the first network device. In this way, it can be ensured that a receiver network device that receives the OAM packet determines, based on the indication information, the type of the identifier that is of the first network device and that is carried in the OAM packet, and accurately reads the identifier of the first network device from the OAM packet. Therefore, a user can perform MPLS-TP OAM in an IP mode to reduce a configuration workload, and can also implement MPLS-TP OAM in a plurality of scenarios such as an IPv4 network, an IPv6 network, and a network including IPv4 and IPv6, to expand an application scope of MPLS-TP OAM, and improve use experience of the user.

FIG. 10 is a schematic flowchart of an OAM packet processing method 400 according to an embodiment of this application. Refer to FIG. 10. For an IP mode of MPLS-TP OAM, the method 400 is performed by a second network device. The method 400 may include, for example, the following steps.

S1001: A second network device receives an OAM packet sent by a first network device, where the OAM packet includes indication information and an identifier of the first network device, and the indication information is used to indicate a type of the identifier of the first network device.

S1002: The second network device reads the identifier of the first network device from the OAM packet based on the indication information.

The second network device may be the network device 2 in the method 100, and the first network device is the network device 1 in the method 100. For specific operations performed by the second network device, refer to the operations performed by the network device 2 in the method 100. The OAM packet may be the OAM packet in the method 100, the indication information may be the indication information in the method 100, and the identifier of the first network device may be the identifier 1 of the network device 1 in the method 100.

In an example, the indication information in the OAM packet may be used to indicate that the type of the identifier of the first network device is an IPv6 address. In this case, for example, S1002 may include: The second network device reads the IPv6 address of the first network device from the OAM packet. This ensures that the method 400 is applicable to an IPv6 network.

In another example, the indication information in the OAM packet is used to indicate that the type of the identifier of the first network device is an IPv4 address. In this case, for example, S1002 may include: The second network device reads the IPv4 address of the first network device from the OAM packet. This ensures that the method 400 is applicable to an IPv4 network.

In some possible implementations, the OAM packet includes a type field used to indicate a MEG type, and the type field may be used to carry the indication information. In a specific implementation, if a value of the type field is a first value, the indication information is used to indicate that the type of the identifier of the first network device is the IPv6 address; or if a value of the type field is a second value, the indication information is used to indicate that the type of the identifier of the first network device is the IPv4 address.

In some other possible implementations, the OAM packet includes a reserved field, and at least one bit in the reserved field may be used to carry the indication information. In a specific implementation, if the at least one bit in the reserved field is a first value, the indication information is used to indicate that the type of the identifier of the first network device is the IPv6 address; or if the at least one bit in the reserved field is a second value, the indication information is used to indicate that the type of the identifier of the first network device is the IPv4 address.

In an example, the OAM packet may further include an identifier of a path from the first network device to the second network device. The identifier of the path may be any one of the following identifiers: a label switched path LSP identifier, a section Section identifier, a pseudo wire PW identifier, or a ring Ring identifier. Specifically, a field that is in the OAM packet and that is used to carry the identifier of the path may be adjacent to a field used to carry the identifier of the first network device. In this way, the receiver can accurately complete OAM detection based on the identifier of the path and the identifier of the first network device.

It should be noted that the OAM packet in this embodiment of this application is specifically a packet corresponding to an IP mode of MPLS-TP OAM.

It can be learned that, according to the method 400 provided in this embodiment of this application, the OAM packet received by the second network device includes the indication information, and the indication information is used to indicate the type of the identifier of the first network device, that is, indicate whether the identifier of the first network device is an IPv4 address or an IPv6 address. In this way, the second network device can determine, based on the indication information, the type of the identifier that is of the first network device and that is carried in the OAM packet, and accurately read the identifier of the first network device from the OAM packet. Therefore, a user can perform MPLS-TP OAM in an IP mode to reduce a configuration workload, and can also implement MPLS-TP OAM in a plurality of scenarios such as an IPv4 network, an IPv6 network, and a network including IPv4 and IPv6, to expand an application scope of MPLS-TP OAM, and improve use experience of the user.

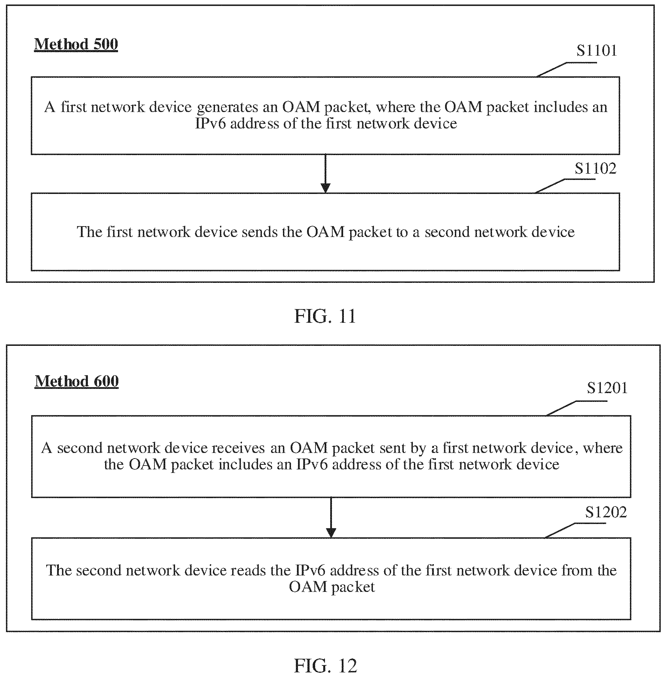

FIG. 11 is a schematic flowchart of an OAM packet processing method 500 according to an embodiment of this application. Refer to FIG. 11. For an IP mode of MPLS-TP OAM, the method 500 is performed by a first network device. The method 500 may include, for example, the following steps.

S1101: A first network device generates an OAM packet, where the OAM packet includes an IPv6 address of the first network device.

S1102: The first network device sends an OAM packet to a second network device.

The first network device may be the network device 1 in the method 200, and the second network device is the network device 2 in the method 200. For specific operations performed by the first network device, refer to the operations performed by the network device 1 in the method 200. The OAM packet may be the OAM packet in the method 200, and the IPv6 address of the first network device may be the IPv6 address of the network device 1 in the method 200.

In an example, the OAM packet may further include an identifier of a path from the first network device to the second network device. The identifier of the path may be any one of the following identifiers: a label switched path LSP identifier, a section Section identifier, a pseudo wire PW identifier, or a ring Ring identifier. Specifically, a field that is in the OAM packet and that is used to carry the identifier of the path may be adjacent to a field used to carry the identifier of the first network device. In this way, the receiver can accurately complete OAM detection based on the identifier of the path and the identifier of the first network device.

It should be noted that the OAM packet in this embodiment of this application is specifically a packet corresponding to an IP mode of MPLS-TP OAM.

It can be learned that, according to the method 500 provided in this embodiment of this application, the OAM packet generated by the first network device includes the IPv6 address of the first network device that is used as the identifier of the first network device. In this way, after receiving the OAM packet, the second network device can accurately read the identifier of the first network device from the OAM packet. Therefore, a user can perform MPLS-TP OAM in an IP mode to reduce a configuration workload, and can also implement MPLS-TP OAM in an IPv6 network scenario to improve use experience of the user.

FIG. 12 is a schematic flowchart of an OAM packet processing method 600 according to an embodiment of this application. Refer to FIG. 12. For an IP mode of MPLS-TP OAM, the method 600 is performed by a second network device. The method 600 may include, for example, the following steps.

S1201: A second network device receives an OAM packet sent by a first network device, where the OAM packet includes an IPv6 address of the first network device.

S1202: The second network device reads the IPv6 address of the first network device from the OAM packet.

The second network device may be the network device 2 in the method 200, and the first network device is the network device 1 in the method 200. For specific operations performed by the second network device, refer to the operations performed by the network device 2 in the method 200. The OAM packet may be the OAM packet in the method 200, and the IPv6 address of the first network device may be the IPv6 address of the network device 1 in the method 200.

In an example, the OAM packet may further include an identifier of a path from the first network device to the second network device. The identifier of the path may be any one of the following identifiers: a label switched path LSP identifier, a section Section identifier, a pseudo wire PW identifier, or a ring Ring identifier. Specifically, a field that is in the OAM packet and that is used to carry the identifier of the path may be adjacent to a field used to carry the identifier of the first network device. In this way, the receiver can accurately complete OAM detection based on the identifier of the path and the identifier of the first network device.

It should be noted that the OAM packet in this embodiment of this application is specifically a packet corresponding to an IP mode of MPLS-TP OAM.

It can be learned that, according to the method 600 provided in this embodiment of this application, the OAM packet received by the second network device includes the IPv6 address of the first network device, so that the second network device can accurately read the identifier of the first network device from the OAM packet. Therefore, a user can perform MPLS-TP OAM in an IP mode to reduce a configuration workload, and can also implement MPLS-TP OAM in an IPv6 network scenario to improve use experience of the user.

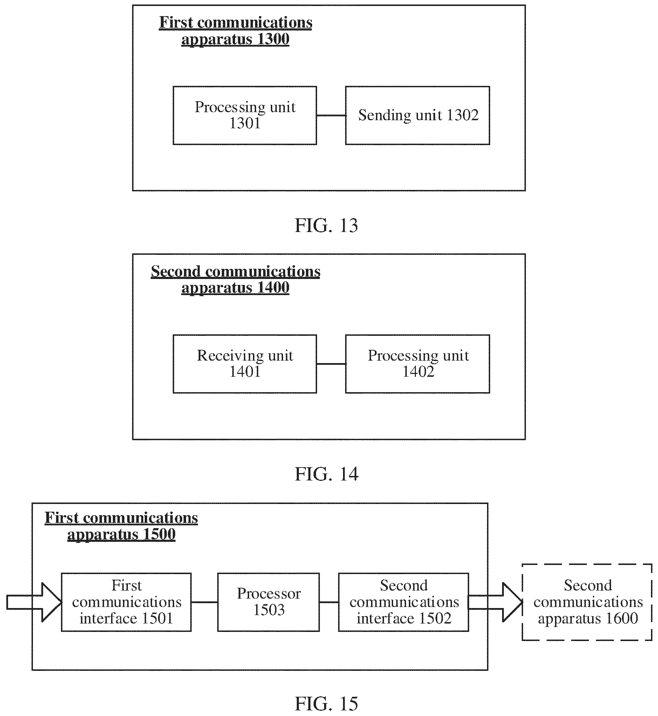

In addition, as shown in FIG. 13, an embodiment of this application further provides a first communications apparatus 1300. The first communications apparatus 1300 includes a processing unit 1301 and a sending unit 1302. The processing unit 1301 is configured to perform the processing operation performed by the network device 1 in the embodiments shown in FIG. 3 and FIG. 7 and the processing operation performed by the first network device in the embodiments shown in FIG. 9 and FIG. 11. The sending unit 1302 is configured to perform the sending operation performed by the network device 1 in the embodiments shown in FIG. 3 and FIG. 7 and the sending operation performed by the first network device in the embodiments shown in FIG. 9 and FIG. 11. For example, the processing unit 1301 may perform an operation in the embodiment in FIG. 3: generating an OAM packet. For example, the sending unit 1302 may perform an operation in the embodiment in FIG. 3: sending the OAM packet to the network device 2.

In addition, as shown in FIG. 14, an embodiment of this application further provides a second communications apparatus 1400. The second communications apparatus 1400 includes a receiving unit 1401 and a processing unit 1402. The receiving unit 1401 is configured to perform the receiving operation performed by the network device 2 in the embodiments shown in FIG. 3 and FIG. 7 and the receiving operation performed by the second network device in the embodiments shown in FIG. 10 and FIG. 12. The processing unit 1402 is configured to perform the processing operation performed by the network device 2 in the embodiments shown in FIG. 3 and FIG. 7 and the processing operation performed by the second network device in the embodiments shown in FIG. 10 and FIG. 12. For example, the receiving unit 1401 may perform an operation in the embodiment in FIG. 3: receiving an OAM packet sent by the network device 1. The processing unit 1402 may perform an operation in the embodiment in FIG. 3: reading an identifier 1 of the network device 1 from the OAM packet based on indication information.

In addition, as shown in FIG. 15, an embodiment of this application further provides a first communications apparatus 1500. The first communications apparatus 1500 includes a first communications interface 1501, a second communications interface 1502, and a processor 1503. The first communications interface 1501 is configured to perform the receiving operation performed by the network device 1 in the embodiments shown in FIG. 3 and FIG. 7 and the receiving operation performed by the first network device in the embodiments shown in FIG. 9 and FIG. 11. The second communications interface 1502 is configured to perform the sending operation performed by the network device 1 in the embodiments shown in FIG. 3 and FIG. 7 and the sending operation performed by the first network device in the embodiments shown in FIG. 9 and FIG. 11. The processor 1503 is configured to perform an operation other than the receiving operation and the sending operation that is performed by the network device 1 in the embodiments shown in FIG. 3 and FIG. 7 and an operation other than the receiving operation and the sending operation that is performed by the first network device in the embodiments shown in FIG. 9 and FIG. 11. For example, the processor 1503 may perform an operation in the embodiment in FIG. 3: generating an OAM packet.

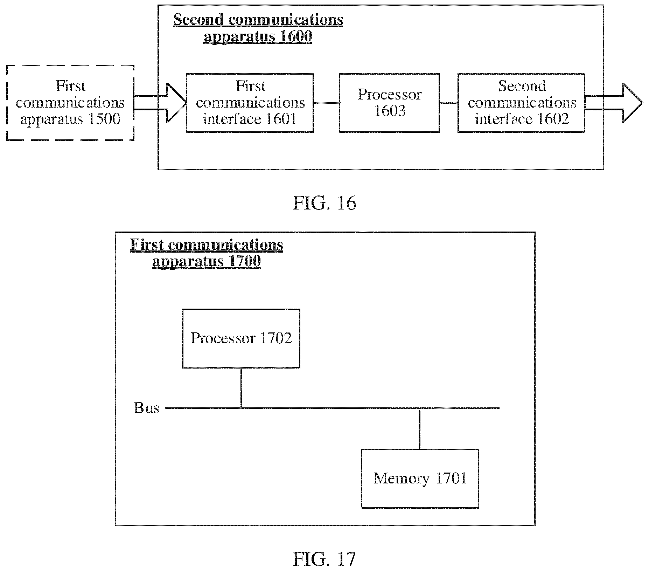

In addition, as shown in FIG. 16, an embodiment of this application further provides a second communications apparatus 1600. The second communications apparatus 1600 includes a first communications interface 1601, a second communications interface 1602, and a processor 1603. The first communications interface 1601 is configured to perform the receiving operation performed by the network device 2 in the embodiments shown in FIG. 3 and FIG. 7 and the receiving operation performed by the second network device in the embodiments shown in FIG. 10 and FIG. 12. The second communications interface 1602 is configured to perform the sending operation performed by the network device 2 in the embodiments shown in FIG. 3 and FIG. 7 and the sending operation performed by the second network device in the embodiments shown in FIG. 10 and FIG. 12. The processor 1603 is configured to perform an operation other than the receiving operation and the sending operation that is performed by the network device 2 in the embodiments shown in FIG. 3 and FIG. 7 and an operation other than the receiving operation and the sending operation that is performed by the second network device in the embodiments shown in FIG. 10 and FIG. 12. For example, the processor 1603 may perform an operation in the embodiment in FIG. 3: reading an identifier 1 of the network device 1 from the OAM packet based on indication information.

In addition, as shown in FIG. 17, an embodiment of this application further provides a first communications apparatus 1700. The first communications apparatus 1700 includes a memory 1701 and a processor 1702 communicating with the memory 1701. The memory 1701 includes computer-readable instructions. The processor 1702 is configured to execute the computer-readable instructions, so that the first communications apparatus 1700 performs the method performed on a side of the network device 1 in the embodiments shown in FIG. 3 and FIG. 7 and the method performed by the first network device in the embodiments shown in FIG. 9 and FIG. 11.

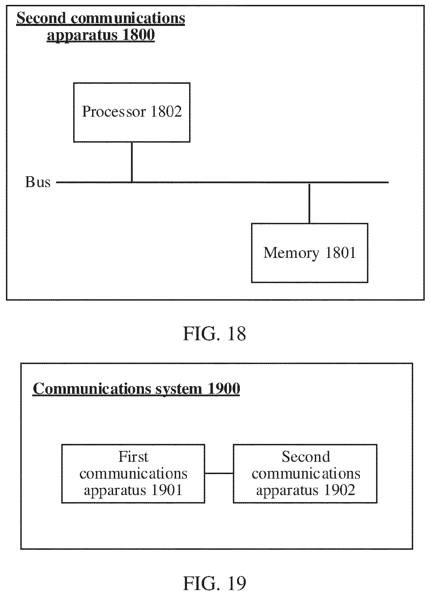

In addition, as shown in FIG. 18, an embodiment of this application further provides a second communications apparatus 1800. The second communications apparatus 1800 includes a memory 1801 and a processor 1802 communicating with the memory 1801. The memory 1801 includes computer-readable instructions. The processor 1802 is configured to execute the computer-readable instructions, so that the second communications apparatus 1800 performs the method performed on a side of the network device 2 in the embodiments shown in FIG. 3 and FIG. 7 and the method performed by the second network device in the embodiments shown in FIG. 10 and FIG. 12.

It may be understood that, in the foregoing embodiment, the processor may be a central processing unit (English: central processing unit, CPU for short), a network processor (English: network processor, NP for short), or a combination of a CPU and an NP. Alternatively, the processor may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array, FPGA for short), generic array logic (English: generic array logic, GAL for short), or any combination thereof. The processor may be one processor, or may include a plurality of processors. The memory may include a volatile memory (English: volatile memory), for example, a random-access memory (English: random-access memory, RAM for short). Alternatively, the memory may include a non-volatile memory (English: non-volatile memory), for example, a read-only memory (English: read-only memory, ROM for short), a flash memory (English: flash memory), a hard disk drive (English: hard disk drive, HDD for short), or a solid-state drive (English: solid-state drive, SSD for short). Alternatively, the memory may include a combination of the foregoing memories. The memory may be one memory, or may include a plurality of memories. In a specific implementation, the memory stores computer-readable instructions, and the computer-readable instructions include a plurality of software modules, for example, a sending module, a processing module, and a receiving module. After executing each software module, the processor may perform a corresponding operation according to an indication of each software module. In this embodiment, an operation performed by a software module is actually an operation performed by the processor according to an indication of the software module. After executing the computer-readable instructions in the memory, the processor may perform, according to an indication of the computer-readable instructions, all operations that can be performed by each network node in OAM detection.

It may be understood that, in the foregoing embodiment, the second communications apparatus 1502 in the first communications apparatus 1500 may be specifically used as the sending unit 1302 in the first communications apparatus 1300 to implement data communication between the first network device and the second network device. The first communications interface 1501 in the first communications apparatus 1500 may be specifically used as the receiving unit in the first communications apparatus 1300, for example, may be configured to receive another OAM packet sent by an upstream network device. Similarly, the first communications interface 1601 in the second communications apparatus 1600 may be specifically used as the receiving unit 1401 in the second communications apparatus 1400 to implement data communication between the first network device and the second network device. The second communications interface 1602 in the second communications apparatus 1600 may be specifically used as the sending unit in the second communications apparatus 1400 to implement data communication between the second network device and a downstream network device.

In addition, as shown in FIG. 19, an embodiment of this application further provides a communications system 1900. The communications system 1900 includes a first communications apparatus 1901 and a second communications apparatus 1902. The first communications apparatus 1901 may be specifically the first communications apparatus 1300, the first communications apparatus 1500, or the first communications apparatus 1700. The second communications apparatus 1902 may be specifically the second communications apparatus 1400, the second communications apparatus 1600, or the second communications apparatus 1800.

It should be noted that each communications apparatus in the foregoing embodiments may be a network device configured to perform the foregoing method, or may be a board, a line card, a chip, or the like configured to perform the foregoing method.

In addition, an embodiment of this application further provides a computer-readable storage medium. The computer-readable storage medium stores instructions, and when the instructions are run on a computer, the computer is enabled to perform the OAM packet processing methods in the embodiments shown in FIG. 3, FIG. 7, and FIG. 9 to FIG. 12.

In addition, an embodiment of this application further provides a computer program product, including a computer program or computer-readable instructions. When the computer program or the computer-readable instructions are run on a computer, the computer is enabled to perform the OAM packet processing methods in the embodiments shown in FIG. 3, FIG. 7, and FIG. 9 to FIG. 12.

It can be learned from the foregoing descriptions of the implementations that, a person skilled in the art may clearly understand that some or all steps of the methods in embodiments may be implemented by software in addition to a universal hardware platform. Based on such an understanding, the technical solutions of this application may be implemented in a form of a software product. The computer software product may be stored in a storage medium, for example, a read-only memory (English: read-only memory, ROM)/RAM, a magnetic disk, or a compact disc, and includes several instructions for instructing a computer device (which may be a personal computer, a server, or a network communications device such as a router) to perform the methods described in embodiments or some parts of embodiments of this application.

Embodiments in this specification are all described in a progressive manner, for same or similar parts in embodiments, reference may be made to these embodiments, and each embodiment focuses on a difference from other embodiments. Especially, system and device embodiments are basically similar to the method embodiments, and therefore are described briefly. For related parts, refer to partial descriptions in the method embodiments. The described device and system embodiments are merely examples. The modules described as separate parts may or may not be physically separate, and parts displayed as modules may or may not be physical modules, and may be located in one position, or may be distributed on a plurality of network units. Some or all of the modules may be selected based on actual requirements to achieve the objectives of the solutions of embodiments. A person of ordinary skill in the art may understand and implement embodiments of the present invention without creative efforts.

## Claims

1. A multi-protocol label switching transport profile MPLS-TP-based operation, administration, and maintenance OAM packet processing method (500), wherein the method comprises:
generating (S1101), by a first network device, an OAM packet, wherein the OAM packet comprises indication information and an identifier of the first network device, and the indication information is used to indicate a type of the identifier of the first network device; and
sending (S1102), by the first network device, the OAM packet to a second network device, the method being **characterised in that** the OAM packet comprises a type field used to indicate a maintenance entity group, MEG, type, and the type field is used to carry the indication information, wherein when a value of the type field is a first value, the indication information is used to indicate that the type of the identifier of the first network device is the IPv6 address; or when a value of the type field is a second value, the indication information is used to indicate that the type of the identifier of the first network device is the IPv4 address, or
**in that** the OAM packet comprises a reserved field, and the reserved field is used to carry the indication information, wherein when at least one bit in the reserved field is a first value, the indication information is used to indicate that the type of the identifier of the first network device is the IPv6 address; or when at least one bit in the reserved field is a second value, the indication information is used to indicate that the type of the identifier of the first network device is the IPv4 address.

2. The method according to claim 1, wherein the indication information is used to indicate that the type of the identifier of the first network device is an internet protocol version 6 IPv6 address or an internet protocol version 4 IPv4 address.

3. The method according to any one of claims 1 to 2, wherein the OAM packet further comprises an identifier of a path from the first network device to the second network device, wherein a field that is in the OAM packet and that is used to carry the identifier of the path is adjacent to a field used to carry the identifier of the first network device, wherein the identifier of the path is any one of the following identifiers: a label switched path LSP identifier, a section Section identifier, a pseudo wire PW identifier, or a ring Ring identifier.

4. The method according to any one of claims 1 to 3, wherein the OAM packet is a packet corresponding to an IP mode of MPLS-TP OAM.

5. A multi-protocol label switching transport profile MPLS-TP-based operation, administration, and maintenance OAM packet processing method, wherein the method comprises:
receiving (S1201), by a second network device, an OAM packet sent by a first network device, wherein the OAM packet comprises indication information and an identifier of the first network device, and the indication information is used to indicate a type of the identifier of the first network device; and
reading (S1202), by the second network device, the identifier of the first network device in the OAM packet based on the indication information, the method being **characterised in that** the OAM packet comprises a type field used to indicate a maintenance entity group MEG type, and the type field is used to carry the indication information, wherein when a value of the type field is a first value, the indication information is used to indicate that the type of the identifier of the first network device is the IPv6 address; or when a value of the type field is a second value, the indication information is used to indicate that the type of the identifier of the first network device is the IPv4 address, or
**in that** the OAM packet comprises a reserved field, and a bit in the reserved field is used to carry the indication information, wherein when at least one bit in the reserved field is a first value, the indication information is used to indicate that the type of the identifier of the first network device is the IPv6 address; or when at least one bit in the reserved field is a second value, the indication information is used to indicate that the type of the identifier of the first network device is the IPv4 address.

6. The method according to claim 5, wherein the indication information is used to indicate that the type of the identifier of the first network device is an internet protocol version 6 IPv6 address or an an internet protocol version 4 IPv4 address, and the reading, by the second network device, the identifier of the first network device in the OAM packet based on the indication information comprises:
reading, by the second network device, the IPv6 address or the IPv4 address of the first network device from the OAM packet.

7. The method according to any one of claims 5 to 6, wherein the OAM packet further comprises an identifier of a path from the first network device to the second network device, wherein a field that is in the OAM packet and that is used to carry the identifier of the path is adjacent to a field used to carry the identifier of the first network device, wherein the identifier of the path is any one of the following identifiers: a label switched path LSP identifier, a section Section identifier, a pseudo wire PW identifier, or a ring Ring identifier.

8. The method according to any one of claims 5 to 7, wherein the OAM packet is a packet corresponding to an IP mode of MPLS-TP OAM.

9. A first network device, comprising:
a processing unit, configured to generate an OAM packet, wherein the OAM packet comprises indication information and an identifier of the first network device, and the indication information is used to indicate a type of the identifier of the first network device; and
a transceiver unit, configured to send the OAM packet to a second network device, the first network device being **characterised by** the fact that the OAM packet comprises a type field used to indicate a maintenance entity group MEG type, and the type field is used to carry the indication information, wherein when a value of the type field is a first value, the indication information is used to indicate that the type of the identifier of the first network device is the IPv6 address; or when a value of the type field is a second value, the indication information is used to indicate that the type of the identifier of the first network device is the IPv4 address, or
by the fact that the OAM packet comprises a reserved field, and the reserved field is used to carry the indication information, wherein when at least one bit in the reserved field is a first value, the indication information is used to indicate that the type of the identifier of the first network device is the IPv6 address; or when at least one bit in the reserved field is a second value, the indication information is used to indicate that the type of the identifier of the first network device is the IPv4 address.

10. A second network device, comprising:
a transceiver unit, configured to receive an OAM packet sent by a first network device, wherein the OAM packet comprises indication information and an identifier of the first network device, and the indication information is used to indicate a type of the identifier of the first network device; and
a processing unit, configured to read the identifier of the first network device in the OAM packet based on the indication information, the second network device being **characterised by** the fact that the OAM packet comprises a type field used to indicate a maintenance entity group MEG type, and the type field is used to carry the indication information, wherein when a value of the type field is a first value, the indication information is used to indicate that the type of the identifier of the first network device is the IPv6 address; or when a value of the type field is a second value, the indication information is used to indicate that the type of the identifier of the first network device is the IPv4 address, or
by the fact that the OAM packet comprises a reserved field, and a bit in the reserved field is used to carry the indication information, wherein when at least one bit in the reserved field is a first value, the indication information is used to indicate that the type of the identifier of the first network device is the IPv6 address; or when at least one bit in the reserved field is a second value, the indication information is used to indicate that the type of the identifier of the first network device is the IPv4 address.

11. A computer-readable storage medium, comprising computer-readable instructions, wherein when the computer-readable instructions are run on a computer, the computer is enabled to perform the method according to any one of claims 1 to 8.

12. A communications system, comprising the first network device according to claim 9 configured to perform the method according to any one of claims 1 to 4 and the second network device according to claim 10 configured to perform the method according to any one of claims 5 to 8.

## Patentansprüche

1. Auf einem Multi-Protocol-Label-Switching-Transportprofil, MPLS-TP, basierendes Operation, Administration and Maintenance-Paketverarbeitungsverfahren, OAM-Paketverarbeitungsverfahren (500), wobei das Verfahren Folgendes umfasst:
Erzeugen (S1101), durch eine erste Netzwerkvorrichtung, eines OAM-Pakets, wobei das OAM-Paket Anzeigeinformationen und eine Kennung der ersten Netzwerkvorrichtung umfasst und die Anzeigeinformationen dazu verwendet werden, einen Typ der Kennung der ersten Netzwerkvorrichtung anzuzeigen; und
Senden (S1102), durch die erste Netzwerkvorrichtung, des OAM-Pakets an eine zweite Netzwerkvorrichtung, wobei das Verfahren **dadurch gekennzeichnet ist, dass** das OAM-Paket ein Typfeld umfasst, das dazu verwendet wird, einen Wartungsentitätsgruppentyp, MEG-Typ, anzuzeigen, und das Typfeld dazu verwendet wird, die Anzeigeinformationen zu enthalten, wobei, wenn ein Wert des Typfelds ein erster Wert ist, die Anzeigeinformationen dazu verwendet werden, anzuzeigen, dass der Typ der Kennung der ersten Netzwerkvorrichtung die IPv6-Adresse ist; oder, wenn ein Wert des Typfelds ein zweiter Wert ist, die Anzeigeinformationen dazu verwendet werden, anzuzeigen, dass der Typ der Kennung der ersten Netzwerkvorrichtung die IPv4-Adresse ist, oder
dadurch, dass das OAM-Paket ein reserviertes Feld umfasst und das reservierte Feld dazu verwendet wird, die Anzeigeinformationen zu enthalten, wobei, wenn mindestens ein Bit in dem reservierten Feld ein erster Wert ist, die Anzeigeinformationen dazu verwendet werden, anzuzeigen, dass der Typ der Kennung der ersten Netzwerkvorrichtung die IPv6-Adresse ist; oder, wenn mindestens ein Bit in dem reservierten Feld ein zweiter Wert ist, die Anzeigeinformationen dazu verwendet werden, anzuzeigen, dass der Typ der Kennung der ersten Netzwerkvorrichtung die IPv4-Adresse ist.

2. Verfahren nach Anspruch 1, wobei die Anzeigeinformationen dazu verwendet werden, anzuzeigen, dass der Typ der Kennung der ersten Netzwerkvorrichtung eine Internetprotokollversion-6-Adresse, IPv6-Adresse, oder eine Internetprotokollversion-4-Adresse, IPv4-Adresse, ist.

3. Verfahren nach einem der Ansprüche 1 bis 2, wobei das OAM-Paket ferner eine Kennung eines Pfads von der ersten Netzwerkvorrichtung zu der zweiten Netzwerkvorrichtung umfasst, wobei ein Feld, das sich in dem OAM-Paket befindet und das dazu verwendet wird, die Kennung des Pfads zu enthalten, an ein Feld angrenzt, das dazu verwendet wird, die Kennung der ersten Netzwerkvorrichtung zu enthalten, wobei die Kennung des Pfads eine der folgenden Kennungen ist: eine Label-Switched-Path-Kennung, LSP-Kennung, eine section-Kennung, Section-Kennung, eine Pseudo-Wire-Kennung, PW-Kennung, oder eine ring-Kennung, Ring-Kennung.

4. Verfahren nach einem der Ansprüche 1 bis 3, wobei das OAM-Paket ein Paket ist, das einem IP-Modus von MPLS-TP OAM entspricht.

5. Auf einem Multi-Protocol-Label-Switching-Transportprofil, MPLS-TP, basierendes Operation, Administration and Maintenance-Paketverarbeitungsverfahren, OAM-Paketverarbeitungsverfahren, wobei das Verfahren Folgendes umfasst:
Empfangen (S1201), durch eine zweite Netzwerkvorrichtung, eines OAM-Pakets, das durch eine erste Netzwerkvorrichtung gesendet wird, wobei das OAM-Paket Anzeigeinformationen und eine Kennung der ersten Netzwerkvorrichtung umfasst und die Anzeigeinformationen dazu verwendet werden, einen Typ der Kennung der ersten Netzwerkvorrichtung anzuzeigen; und
Lesen (S1202), durch die zweite Netzwerkvorrichtung, der Kennung der ersten Netzwerkvorrichtung in dem OAM-Paket basierend auf den Anzeigeinformationen, wobei das Verfahren **dadurch gekennzeichnet ist, dass**
das OAM-Paket ein Typfeld umfasst, das dazu verwendet wird, einen Wartungsentitätsgruppentyp, MEG-Typ, anzuzeigen, und das Typfeld dazu verwendet wird, die Anzeigeinformationen zu enthalten, wobei, wenn ein Wert des Typfelds ein erster Wert ist, die Anzeigeinformationen dazu verwendet werden, anzuzeigen, dass der Typ der Kennung der ersten Netzwerkvorrichtung die IPv6-Adresse ist; oder, wenn ein Wert des Typfelds ein zweiter Wert ist, die Anzeigeinformationen dazu verwendet werden, anzuzeigen, dass der Typ der Kennung der ersten Netzwerkvorrichtung die IPv4-Adresse ist, oder
dadurch, dass das OAM-Paket ein reserviertes Feld umfasst und ein Bit in dem reservierten Feld dazu verwendet wird, die Anzeigeinformationen zu enthalten, wobei, wenn mindestens ein Bit in dem reservierten Feld ein erster Wert ist, die Anzeigeinformationen dazu verwendet werden, anzuzeigen, dass der Typ der Kennung der ersten Netzwerkvorrichtung die IPv6-Adresse ist; oder, wenn mindestens ein Bit in dem reservierten Feld ein zweiter Wert ist, die Anzeigeinformationen dazu verwendet werden, anzuzeigen, dass der Typ der Kennung der ersten Netzwerkvorrichtung die IPv4-Adresse ist.

6. Verfahren nach Anspruch 5, wobei die Anzeigeinformationen dazu verwendet werden, anzuzeigen, dass der Typ der Kennung der ersten Netzwerkvorrichtung eine Internetprotokollversion-6-Adresse, IPv6-Adresse, oder eine Internetprotokollversion-4-Adresse, IPv4-Adresse, ist, und das Lesen, durch die zweite Netzwerkvorrichtung, der Kennung der ersten Netzwerkvorrichtung in dem OAM-Paket basierend auf den Anzeigeinformationen Folgendes umfasst:
Lesen, durch die zweite Netzwerkvorrichtung, der IPv6-Adresse oder der IPv4-Adresse der ersten Netzwerkvorrichtung aus dem OAM-Paket.

7. Verfahren nach einem der Ansprüche 5 bis 6, wobei das OAM-Paket ferner eine Kennung eines Pfads von der ersten Netzwerkvorrichtung zu der zweiten Netzwerkvorrichtung umfasst, wobei ein Feld, das sich in dem OAM-Paket befindet und das dazu verwendet wird, die Kennung des Pfads zu enthalten, an ein Feld angrenzt, das dazu verwendet wird, die Kennung der ersten Netzwerkvorrichtung zu enthalten, wobei die Kennung des Pfads eine der folgenden Kennungen ist: eine Label-Switched-Path-Kennung, LSP-Kennung, eine section-Kennung, Section-Kennung, eine Pseudo-Wire-Kennung, PW-Kennung, oder eine ring-Kennung, Ring-Kennung.

8. Verfahren nach einem der Ansprüche 5 bis 7, wobei das OAM-Paket ein Paket ist, das einem IP-Modus von MPLS-TP OAM entspricht.

9. Erste Netzwerkvorrichtung, umfassend:
eine Verarbeitungseinheit, die dazu konfiguriert ist, ein OAM-Paket zu erzeugen, wobei das OAM-Paket Anzeigeinformationen und eine Kennung der ersten Netzwerkvorrichtung umfasst und die Anzeigeinformationen dazu verwendet werden, einen Typ der Kennung der ersten Netzwerkvorrichtung anzuzeigen; und
eine Sende-Empfangseinheit, die dazu konfiguriert ist, das OAM-Paket an eine zweite Netzwerkvorrichtung zu senden, wobei die erste Netzwerkvorrichtung durch die Tatsache gekennzeichnet ist, dass das OAM-Paket ein Typfeld umfasst, das dazu verwendet wird, einen Wartungsentitätsgruppentyp, MEG-Typ, anzuzeigen, und das Typfeld dazu verwendet wird, die Anzeigeinformationen zu enthalten, wobei, wenn ein Wert des Typfelds ein erster Wert ist, die Anzeigeinformationen dazu verwendet werden, anzuzeigen, dass der Typ der Kennung der ersten Netzwerkvorrichtung die IPv6-Adresse ist; oder, wenn ein Wert des Typfelds ein zweiter Wert ist, die Anzeigeinformationen dazu verwendet werden, anzuzeigen, dass der Typ der Kennung der ersten Netzwerkvorrichtung die IPv4-Adresse ist, oder
durch die Tatsache gekennzeichnet ist, dass das OAM-Paket ein reserviertes Feld umfasst und das reservierte Feld dazu verwendet wird, die Anzeigeinformationen zu enthalten, wobei, wenn mindestens ein Bit in dem reservierten Feld ein erster Wert ist, die Anzeigeinformationen dazu verwendet werden, anzuzeigen, dass der Typ der Kennung der ersten Netzwerkvorrichtung die IPv6-Adresse ist; oder, wenn mindestens ein Bit in dem reservierten Feld ein zweiter Wert ist, die Anzeigeinformationen dazu verwendet werden, anzuzeigen, dass der Typ der Kennung der ersten Netzwerkvorrichtung die IPv4-Adresse ist.

10. Zweite Netzwerkvorrichtung, umfassend:
eine Sende-Empfangseinheit, die dazu konfiguriert ist, ein OAM-Paket zu empfangen, das durch eine erste Netzwerkvorrichtung gesendet wird, wobei das OAM-Paket Anzeigeinformationen und eine Kennung der ersten Netzwerkvorrichtung umfasst und die Anzeigeinformationen dazu verwendet werden, einen Typ der Kennung der ersten Netzwerkvorrichtung anzuzeigen; und
eine Verarbeitungseinheit, die dazu konfiguriert ist, die Kennung der ersten Netzwerkvorrichtung in dem OAM-Paket basierend auf den Anzeigeinformationen zu lesen, wobei die zweite Netzwerkvorrichtung durch die Tatsache gekennzeichnet ist, dass
das OAM-Paket ein Typfeld umfasst, das dazu verwendet wird, einen Wartungsentitätsgruppentyp, MEG-Typ, anzuzeigen, und das Typfeld dazu verwendet wird, die Anzeigeinformationen zu enthalten, wobei, wenn ein Wert des Typfelds ein erster Wert ist, die Anzeigeinformationen dazu verwendet werden, anzuzeigen, dass der Typ der Kennung der ersten Netzwerkvorrichtung die IPv6-Adresse ist; oder, wenn ein Wert des Typfelds ein zweiter Wert ist, die Anzeigeinformationen dazu verwendet werden, anzuzeigen, dass der Typ der Kennung der ersten Netzwerkvorrichtung die IPv4-Adresse ist, oder
durch die Tatsache gekennzeichnet ist, dass das OAM-Paket ein reserviertes Feld umfasst und ein Bit in dem reservierten Feld dazu verwendet wird, die Anzeigeinformationen zu enthalten, wobei, wenn mindestens ein Bit in dem reservierten Feld ein erster Wert ist, die Anzeigeinformationen dazu verwendet werden, anzuzeigen, dass der Typ der Kennung der ersten Netzwerkvorrichtung die IPv6-Adresse ist; oder, wenn mindestens ein Bit in dem reservierten Feld ein zweiter Wert ist, die Anzeigeinformationen dazu verwendet werden, anzuzeigen, dass der Typ der Kennung der ersten Netzwerkvorrichtung die IPv4-Adresse ist.

11. Computerlesbares Speichermedium, umfassend computerlesbare Anweisungen, wobei, wenn die computerlesbaren Anweisungen auf einem Computer ausgeführt werden, der Computer in die Lage versetzt wird, das Verfahren nach einem der Ansprüche 1 bis 8 durchzuführen.

12. Kommunikationssystem, umfassend die erste Netzwerkvorrichtung nach Anspruch 9, die dazu konfiguriert ist, das Verfahren nach einem der Ansprüche 1 bis 4 durchzuführen, und die zweite Netzwerkvorrichtung nach Anspruch 10, die dazu konfiguriert ist, das Verfahren nach einem der Ansprüche 5 bis 8 durchzuführen.

## Revendications

1. Procédé de traitement de paquets (500) d'exploitation, d'administration et de maintenance (OAM) basé sur un profil de transport à commutation d'étiquettes multiprotocole (MPLS-TP), dans lequel le procédé comprend :
la génération (S1101), par un premier dispositif de réseau, d'un paquet OAM, dans lequel le paquet OAM comprend des informations d'indication et un identifiant du premier dispositif de réseau, et les informations d'indication sont utilisées pour indiquer un type de l'identifiant du premier dispositif de réseau ; et
l'envoi (S1102), par le premier dispositif de réseau, du paquet OAM à un second dispositif de réseau, le procédé étant **caractérisé en ce que** le paquet OAM comprend un champ de type utilisé pour indiquer un type de groupe d'entités de maintenance, MEG, et le champ de type est utilisé pour transporter les informations d'indication, dans lequel, lorsqu'une valeur du champ de type est une première valeur, les informations d'indication sont utilisées pour indiquer que le type de l'identifiant du premier dispositif réseau est l'adresse IPv6 ; ou lorsqu'une valeur du champ de type est une seconde valeur, les informations d'indication sont utilisées pour indiquer que le type de l'identifiant du premier dispositif réseau est l'adresse IPv4, ou
**en ce que** le paquet OAM comprend un champ réservé, et le champ réservé est utilisé pour transporter les informations d'indication, dans lequel lorsqu'au moins un bit dans le champ réservé est une première valeur, les informations d'indication sont utilisées pour indiquer que le type de l'identifiant du premier dispositif de réseau est l'adresse IPv6 ; ou lorsqu'au moins un bit dans le champ réservé est une seconde valeur, les informations d'indication sont utilisées pour indiquer que le type de l'identifiant du premier dispositif de réseau est l'adresse IPv4.

2. Procédé selon la revendication 1, dans lequel les informations d'indication sont utilisées pour indiquer que le type de l'identifiant du premier dispositif de réseau est une adresse IPv6 de protocole Internet version 6 ou une adresse IPv4 de protocole Internet version 4.

3. Procédé selon l'une quelconque des revendications 1 à 2, dans lequel le paquet OAM comprend également un identifiant d'un chemin allant du premier dispositif de réseau au second dispositif de réseau, dans lequel un champ qui est dans le paquet OAM et qui est utilisé pour transporter l'identifiant du chemin est adjacent à un champ utilisé pour transporter l'identifiant du premier dispositif de réseau, dans lequel l'identifiant du chemin est l'un quelconque des identifiants suivants : un identifiant de chemin à commutation d'étiquettes (LSP), un identifiant de section Section, un identifiant de pseudo-fil (PW) ou un identifiant d'anneau Anneau.

4. Procédé selon l'une quelconque des revendications 1 à 3, dans lequel le paquet OAM est un paquet correspondant à un mode IP de MPLS-TP OAM.

5. Procédé de traitement de paquets d'exploitation, d'administration et de maintenance (OAM) basé sur un profil de transport à commutation d'étiquettes multiprotocole (MPLS-TP), dans lequel le procédé comprend :
la réception (S1201), par un second dispositif de réseau, d'un paquet OAM envoyé par un premier dispositif de réseau, dans lequel le paquet OAM comprend des informations d'indication et un identifiant du premier dispositif de réseau, et les informations d'indication sont utilisées pour indiquer un type de l'identifiant du premier dispositif de réseau ; et
la lecture (S1202), par le second dispositif de réseau, de l'identifiant du premier dispositif de réseau dans le paquet OAM sur la base des informations d'indication, le procédé étant **caractérisé en ce que**
le paquet OAM comprend un champ de type utilisé pour indiquer un type de groupe d'entités de maintenance, MEG, et le champ de type est utilisé pour transporter les informations d'indication, dans lequel, lorsqu'une valeur du champ de type est une première valeur, les informations d'indication sont utilisées pour indiquer que le type de l'identifiant du premier dispositif de réseau est l'adresse IPv6 ; ou lorsqu'une valeur du champ de type est une seconde valeur, les informations d'indication sont utilisées pour indiquer que le type de l'identifiant du premier dispositif de réseau est l'adresse IPv4, ou
**en ce que** le paquet OAM comprend un champ réservé, et un bit dans le champ réservé est utilisé pour transporter les informations d'indication, dans lequel lorsqu'au moins un bit dans le champ réservé est une première valeur, les informations d'indication sont utilisées pour indiquer que le type de l'identifiant du premier dispositif de réseau est l'adresse IPv6 ; ou lorsqu'au moins un bit dans le champ réservé est une seconde valeur, les informations d'indication sont utilisées pour indiquer que le type de l'identifiant du premier dispositif de réseau est l'adresse IPv4.

6. Procédé selon la revendication 5, dans lequel les informations d'indication sont utilisées pour indiquer que le type de l'identifiant du premier dispositif de réseau est une adresse IPv6 de protocole Internet version 6 ou une adresse IPv4 de protocole Internet version 4, et la lecture, par le second dispositif de réseau, de l'identifiant du premier dispositif de réseau dans le paquet OAM sur la base des informations d'indication comprend :
la lecture, par le second dispositif de réseau, de l'adresse IPv6 ou de l'adresse IPv4 du premier dispositif de réseau à partir du paquet OAM.

7. Procédé selon l'une quelconque des revendications 5 à 6, dans lequel le paquet OAM comprend également un identifiant d'un chemin allant du premier dispositif de réseau au second dispositif de réseau, dans lequel un champ qui est dans le paquet OAM et qui est utilisé pour transporter l'identifiant du chemin est adjacent à un champ utilisé pour transporter l'identifiant du premier dispositif de réseau, dans lequel l'identifiant du chemin est l'un quelconque des identifiants suivants : un identifiant de chemin à commutation d'étiquettes (LSP), un identifiant de section Section, un identifiant de pseudo-fil (PW) ou un identifiant d'anneau Anneau.

8. Procédé selon l'une quelconque des revendications 5 à 7, dans lequel le paquet OAM est un paquet correspondant à un mode IP de MPLS-TP OAM.

9. Premier dispositif de réseau, comprenant :
une unité de traitement, configurée pour générer un paquet OAM, dans lequel le paquet OAM comprend des informations d'indication et un identifiant du premier dispositif de réseau, et les informations d'indication sont utilisées pour indiquer un type de l'identifiant du premier dispositif de réseau ; et
une unité émetteur-récepteur, configurée pour envoyer le paquet OAM à un second dispositif de réseau, le premier dispositif de réseau étant **caractérisé en ce que** le paquet OAM comprend un champ de type utilisé pour indiquer un type de groupe d'entités de maintenance, MEG, et le champ de type est utilisé pour transporter les informations d'indication, dans lequel, lorsqu'une valeur du champ de type est une première valeur, les informations d'indication sont utilisées pour indiquer que le type de l'identifiant du premier dispositif réseau est l'adresse IPv6 ; ou lorsqu'une valeur du champ de type est une seconde valeur, les informations d'indication sont utilisées pour indiquer que le type de l'identifiant du premier dispositif réseau est l'adresse IPv4, ou
**en ce que** le paquet OAM comprend un champ réservé, et le champ réservé est utilisé pour transporter les informations d'indication, dans lequel lorsqu'au moins un bit dans le champ réservé est une première valeur, les informations d'indication sont utilisées pour indiquer que le type de l'identifiant du premier dispositif de réseau est l'adresse IPv6 ; ou lorsqu'au moins un bit dans le champ réservé est une seconde valeur, les informations d'indication sont utilisées pour indiquer que le type de l'identifiant du premier dispositif de réseau est l'adresse IPv4.

10. Second dispositif de réseau, comprenant :
une unité émetteur-récepteur, configurée pour recevoir un paquet OAM envoyé par un premier dispositif de réseau, dans lequel le paquet OAM comprend des informations d'indication et un identifiant du premier dispositif de réseau, et les informations d'indication sont utilisées pour indiquer un type de l'identifiant du premier dispositif de réseau ; et
une unité de traitement, configurée pour lire l'identifiant du premier dispositif de réseau dans le paquet OAM sur la base des informations d'indication, le second dispositif de réseau étant **caractérisé en ce que**
le paquet OAM comprend un champ de type utilisé pour indiquer un type de groupe d'entités de maintenance, MEG, et le champ de type est utilisé pour transporter les informations d'indication, dans lequel, lorsqu'une valeur du champ de type est une première valeur, les informations d'indication sont utilisées pour indiquer que le type de l'identifiant du premier dispositif de réseau est l'adresse IPv6 ; ou lorsqu'une valeur du champ de type est une seconde valeur, les informations d'indication sont utilisées pour indiquer que le type de l'identifiant du premier dispositif de réseau est l'adresse IPv4, ou
**en ce que** le paquet OAM comprend un champ réservé, et un bit dans le champ réservé est utilisé pour transporter les informations d'indication, dans lequel lorsqu'au moins un bit dans le champ réservé est une première valeur, les informations d'indication sont utilisées pour indiquer que le type de l'identifiant du premier dispositif de réseau est l'adresse IPv6 ; ou lorsqu'au moins un bit dans le champ réservé est une seconde valeur, les informations d'indication sont utilisées pour indiquer que le type de l'identifiant du premier dispositif de réseau est l'adresse IPv4.

11. Support de stockage lisible par ordinateur, comprenant des instructions lisibles par ordinateur, dans lequel, lorsque les instructions lisibles par ordinateur sont exécutées sur un ordinateur, l'ordinateur est activé pour réaliser le procédé selon l'une quelconque des revendications 1 à 8.

12. Système de communication, comprenant le premier dispositif de réseau selon la revendication 9, configuré pour réaliser le procédé selon l'une quelconque des revendications 1 à 4 et le second dispositif de réseau selon la revendication 10, configuré pour réaliser le procédé selon l'une quelconque des revendications 5 à 8.
